Europäisches Patentamt

European Patent Office

Office européen des brevets

(19)

(11) **EP 0 809 869 B1**

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(21) Anmeldenummer: **96901701.1**

(22) Anmeldetag: **06.02.1996**

(51) Int Cl.$^6$: **H01M 8/18**, H01M 14/00

(86) Internationale Anmeldenummer:
**PCT/DE96/00182**

(87) Internationale Veröffentlichungsnummer:
**WO 96/24959 (15.08.1996 Gazette 1996/37)**

(54) **VERFAHREN ZUR UMWANDLUNG VON SORPTIONSENERGIE IN ELEKTRISCHE ENERGIE UNTER VERWENDUNG EINER GALVANISCHEN KONZENTRATIONSZELLE**

METHOD FOR THE CONVERSION OF SORPTION ENERGY INTO ELECTRICAL ENERGY USING A GALVANIC CONCENTRATION CELL

PROCEDE DE LA CONVERSION D'ENERGIE DE SORPTION EN ENERGIE ELECTRIQUE UTILISANT UNE CELLULE A CONCENTRATION GALVANIQUE

(84) Benannte Vertragsstaaten:
**AT BE CH DE DK ES FR GB GR IE IT LI NL PT SE**

(30) Priorität: **08.02.1995 DE 19504159**

(43) Veröffentlichungstag der Anmeldung:
**03.12.1997 Patentblatt 1997/49**

(73) Patentinhaber: **Vinz, Peter, Dr.-Ing.**
**82467 Garmisch-Partenkirchen (DE)**

(72) Erfinder: **Vinz, Peter, Dr.-Ing.**
**82467 Garmisch-Partenkirchen (DE)**

(56) Entgegenhaltungen:
**WO-A-91/11237          WO-A-92/08252**
**DE-A- 3 302 635**

**Beschreibung**

Die Erfindung betrifft ein Verfahren zur Umwandlung von Sorptionsenergie in elektrische Nutzarbeit mittels einer galvanischen Konzentrationszelle, bei dem der Konzentrationszelle ein ternäres, aus einem Trägergas/Dampfgemisch und einer den Dampf absorbierenden Lösung bestehendes Stoffsystem zu- und abgeleitet ist sowie die Ausbildung der zu- und abgeleiteten Stoffströme zu einem isobaren Stoffkreislauf mit thermischer Zerlegung der Lösung und Separierung der Lösungskomponenten außerhalb der Konzentrationszelle.

Ein Verfahren anderer Art, bei dem einer galvanischen Konzentrationszelle ein ternäres Stoffsystem zu- und abgeleitet ist, ist in der DE-A-3302635 offenbart. Das Verfahren arbeitet mit Wasserstoff und einer wäßrigen Ammoniaklösung in einem isobaren Stoffkreislauf mit außerhalb der Konzentrationszelle ausgeführter thermischen Zerlegung der Lösung und Rückverflüssigung der ausgedampften Lösungskomponente, wobei der Konzentrationszelle kathodenseitig flüssiges Ammoniak und gasförmiger Wasserstoff und anodenseitig die ammoniakverarmte Lösung zugeführt sind.

Sowohl die Gestaltung der galvanischen Konzentrationszelle als auch die Gestaltung des isobaren Stoffkreislaufs sind für den galvanischen Reaktionsmechanismus innerhalb der Konzentrationszelle und ihr Betriebsverhalten unbefriedigend.

Zum einen enthält das der Konzentrationszelle kathodenseitig verflüssigt zugeleitete Ammoniak Restanteile von Wasser, das während des Betriebs zu einer steten Verwässerung des Flüssigammoniaks in der Konzentrationszelle und damit nach kurzer Zeit zum Betriebsstillstand führt, weil eine kontinuierliche Entsorgung verwässerten Ammoniaks aus der Zelle fehlt. Zum anderen beruht die Methode, wie die Abwärme der Ammoniakverflüssigung im Stoffumlauf belassen und damit den thermischen Wirkungsgrad der galvanischen Energiewandlung steigern soll, auf Verfahrensmerkmalen, die einen Rückgewinn der Verflüssigungabwärme nicht zulassen, beispielsweise die Verflüssigung überhitzten Ammoniakdampfes bei einer höheren als seiner Sättigungstemperatur.

Darüber hinaus ist wegen der geringen Löslichkeit von gasförmigem Wasserstoff in flüssigem Ammoniak das stöchiometrische Heranführen der Reaktanden an die Reaktionszone der Kathode behindert, was sich mindernd auf den Stoffumsatz und damit auf die elektrische Energieausbeute auswirkt.

Ein prinzipiell anderes Verfahren zum Betreiben einer Reaktionszelle im geschlossenen, isobaren Stoffumlauf ist aus den Schriften DE-OS 1596143 und DE-OS 1599153 bekannt. Als Stoffsystem agiert ein gasförmiger Halogenwasserstoff, der auf elektrolytischem Wege, d.h. unter elektrischer Energiezufuhr partiell in elementaren Wasserstoff und das entsprechende flüssige (Br) oder gasförmige (Cl) Halogen zerlegt wird, wobei die Zersetzungsprodukte einer Rekombinationszelle wieder zugeleitet und unter Abgabe von elektrischer Energie in die Ausgangsverbindung überführt werden. Bei der Rekombination soll ein endlicher Betrag an Umgebungswärme in elektrische Nutzenergie überführt werden.

Ferner sind in der EP 0531293 verschiedene Verfahren zur Umwandlung von thermisch generierter Sorptionsenergie in elektrische Arbeit mit geschlossenem ternären Stoffumlauf, unter Verwendung eines Trägergases und einer thermisch zerlegbaren sorptiv wirkenden, wäßrigen Lösung beschrieben, wobei die Energieumwandlung in einer galvanischen Reaktionszelle ausgeführt werden soll, die thermische Zerlegung der Lösung und Separierung der Lösungskomponenten dagegen außerhalb der Konzentrationszelle.

Weitere Sorptionsenergie und chemische Energie umwandelnde galvanische Prozesse mit isobaren Stoffkreisläufen sind aus der WO-A-9208252 bekannt.

Aus beiden Schriften gehen allerdings keine Angaben hervor, wie derartige galvanische Zellen nutzbringend betrieben werden können. Damit fehlt eine wesentliche Voraussetzung für die technische Verwertung dieser nutzarbeitsgenerierenden Umwandlungsverfahren.

Eine Aufgabe der Erfindung ist daher die Erarbeitung der prinzipiellen Gestaltung und Betriebsweise einer technisch verwertbaren, galvanischen Konzentrationszelle zur Umwandlung von Sorptionsenergie in elektrische Nutzarbeit unter Berücksichtigung der beim Sorptionsprozeß innerhalb der Zelle ablaufenden Reaktionsmechanismen. Eine andere Aufgabe der Erfindung ist die Ausbildung der zu- und abgeleiteten Stoffströme zu einem betriebsstabilen, regelbaren, isobaren Stoffkreislauf mit hohem Prozeßwirkungsgrad, unter Vermeidung der zuvor beschriebenen Nachteile einer galvanischen Konzentrationszelle. Eine weitere Aufgabe der Erfindung ist die Vermehrung der elektrischen Energieausbeute eines thermogalvanischen Reaktionskreislaufs über die Stoffumwandlung hinaus durch direkte Nutzung der Verdampfungsenergie.

Die Aufgabe der technisch verwertbaren, prinzipiellen Gestaltung und Betriebsweise eines thermogalvanischen Reaktionskreislaufs wird mit den Merkmalkombinationen des Anspruchs 1 für eine Membranelektrolyt-Konzentrationszelle und mit den Merkmalkombinationen des Anspruchs 2 für eine Flüssigspaltzelle gelöst, wobei beide Zellenkonfigurationen ohne geometrische Veränderungen sowohl den anionengenerierenden wie auch den kationengenerienden galvanischen Reaktionsmechanismus ermöglichen. Mit der nutzarbeitsgenerierenden, sorptiven Verflüssigung des Dampfes in der Lösung werden auf vorteilhafte Weise vorzeitige Stoffumwandlungsbegrenzungen der galvanischen Konzentrationszelle aufgehoben, so beispielsweise die geringe Wasserstofflöslichkeit in Flüssigkeiten und das Unvermögen der galvanischen Zelle, einen Anteil der Verdampfungsenergie unmittelbar als Nutzarbeit zu gewinnen. Dadurch erzielen Sorptionsenergie wandelnde galvanische Konzentrationszellen höhere Energieausbeuten und Wirkungsgrade als galvanische Konzentrationszellen, denen die Reaktanden flüssig zugeführt werden.

Nach den Merkmalkombinationen des Anspruchs 3 können in den galvanischen Konzentrationszellen nach den Ansprüchen 1 oder 2 beliebige, thermisch in eine Dampfkomponente und eine Flüssigkomponente zerlegbare, sorptive Flüssigkeitsgemische in Kombination mit einem mit der Dampfkomponente ionenbildenden Trägergas, wie beispielsweise Wasserstoff oder Sauerstoff, zur Gewinnung von elektrischer Arbeit aus Sorptionsenergie verwendet werden.

Gemäß Anspruch 4 kann dem individuellen, ternären Stoffsystem bei Bedarf zur Verbesserung der Ionenleitfähigkeit ein im Lösungsmittel löslicher Elektrolyt mit vernachlässigbarem Eigendampfdruck hinzugefügt werden, womit der Innenwiderstand der Konzentrationszelle in vorteilhafter Weise gemindert werden kann.

Derartige, mit einem Trägergas kombinierbare Flüssigkeitsgemische sind beispielsweise die wäßrigen Lösungen von NH3, $H_2SO_4$ oder LiBr oder die Lösung $NH_3/LiNO_3$. Diese und weitere Lösungen wurden von Niebergall in "Arbeitsstoffpaare für Absorptions-Kälteanlagen" hinsichtlich ihrer Verwendbarkeit bei niederen Temperaturen untersucht. Der Niedertemperatureinsatz dieser Lösungen ist auch für die thermogalvanische Energiewandlung vorteilhaft, weil damit die Abwärme vieler technischer Prozesse als kostenloses, umwandelbares Heizenergiepotential genutzt werden kann.

Gemäß den Prozeßmerkmalen des Anspruchs 6 kann der in der galvanischen Konzentrationszelle zwischen dem Trägergas-Dampfgemisch und der sorptiven Lösung wirkende Dampfpartialdruckunterschied nicht nur über den Systemgesamtdruck und damit über die einmalige Trägergasbefüllung, sondern auch über die Umlaufgeschwindigkeit des im Kreislauf geführten, dampfspeichernden Trägergases erhöht werden. Dies bewirkt eine Nutzspannungserhöhung ohne mechanische Mehrbelastung der Zelleneinbauten, bei nur unwesentlich höherer Leistungsaufnahme des im äußeren Stoffkreislaufteil angeordneten Gasverdichters.

Die adiabatische Prozeßführung innerhalb der galvanischen Konzentrationszelle hat einen vereinfachten konstruktiven Zellaufbau zur Folge, weil auf entsprechende Wärmeübertragungskanäle innerhalb der Zelle verzichtet werden kann. Gemäß den Merkmalen des Anspruchs 5 sind derartige Kanäle für die nichtadiabatische Prozeßführung erforderlich. Sie werden von einem Wärmeübertragungsmedium, vorzugsweise einer gleichartigen Lösung durchströmt, die thermischen Kontakt zur absorbierenden Lösung und zur lösungsbenetzten Elektrode hält und die Konzentrationszelle sowohl kühlen als auch beheizen kann.

Die Aufgabe der Vermehrung der elektrischen Energieausbeute der galvanischen Konzentrationszelle wird gemäß Anspruch 7 mit der Zuordnung einer Aktivierungsquelle gelöst, die den Elektroden permanent eine quasi elektrostatische Spannungsdifferenz von außen aufprägt, wobei diese vorzugsweise mehrere Volt betragen kann und der Eigenspannungsdifferenz der Zelle überlagert ist. Sie bewirkt innerhalb der Konzentrationszelle eine sorptive Dampfverflüssigung unter Temperaturabnahme der sich aufkonzentrierenden Lösung, wobei die angelegte Spannungsdifferenz proportional zur Temperaturabnahme und umgekehrt proportional zur Aufkonzentrierung der Lösung ist und am äußeren Lastwiderstand abzüglich der Zellenspannungsverluste als Arbeitsspannungsdifferenz zur Verfügung steht. Mit dieser Maßnahme wird neben der elektrischen Nutzarbeitsausbeute auch die Leistungsdichte der galvanischen Konzentrationszelle vermehrt und der thermische Wirkungsgrad weiter erhöht.

Mit den Merkmalskombinationen des Anspruchs 8 werden die der Konzentrationszelle zu- und abgeleiteten Stoffströme zu einem isobaren, Stoffkreislauf ausgebildet, der betriebsstabil den stofflichen Potentialunterschied der galvanischen Konzentrationszelle bereitstellt, über die voneinander unabhängigen Fördereinrichtungen regelbar ist und mit den kombinierten Verfahrenskomponenten einen hohen thermogalvanischen Wirkungsgrad aufweist.

Wirkt auf den Reaktionsablauf innerhalb der galvanischen Konzentrationszelle die elektrostatische Spannung der Aktivierungsquelle ein, so ist mit den Merkmalkombinationen des Anspruches 9 der verfahrenstechnische Aufwand im äußeren Teil des Stoffkreislauf deutlich vereinfacht und die Energieausbeute der galvanischen Konzentrationszelle vermehrt.

Die Erfindung wird anhand der Figuren 1 bis 7 beschrieben. Im einzelnen zeigen die Figuren;

Fig. 1 das Funktionsprinzip und den schematischen Aufbau einer Sorptionsenergie wandelnden galvanischen Membranelektrolytzelle, mit der beispielhaften Darstellung eines anionengenerierenden, ternären Stoffsystems $S_I$: [$O_2{}^g$, $H_2O^d$] [$OH^{-EL}$, El] [$LiBr^{aq}$, $O_2{}^g$] und eines kationengenerierenden, ternären Stoffsystems $S_{II}$: [$H_2{}^g$, $NH_3{}^d$] [$H_3O^{+EL}$, El] [$NH_3{}^{aq}$, $H_2{}^g$],

Fig. 2 das Funktionsprinzip und den schematischen Aufbau einer Sorptionsenergie wandelnden galvanischen Flüssigspaltzelle mit der beispielhaften Darstellung eines anionengenerierenden, ternären Stoffsystems SIII: [$O_2{}^g$, $H_2O^d$] [$OH^{-aq}$, $H_2SO_4{}^{aq}$] [$O_2g$, $H_2SO_4{}^{aq}$] und eines kationengenerierenden, ternären Stoffsystems $S_{IV}$: [$H_2{}^g$, $H_2O^d$] [$H_3O^{+aq}$, $H_2SO_4{}^{aq}$] [$H_2SO_4{}^{aq}$, $H_2{}^g$],

Fig. 3 den Kreisprozeß und die Stoffzustände einer adiabatischen galvanischen Konzentrationszelle in einem schematischen T/ξ- und P/ξ-Diagramm für ein willkürliches, ionengenerierendes, ternäres Stoffsystem,

Fig. 4     das Funktionsschaltbild eines thermogalvanischen Reaktionskreislaufs, gemäß dem Kreisprozeß nach Fig.3,

Fig. 5     den Kreisprozeß und die Stoffzustände der galvanischen Konzentrationszelle mit elektrostatischer Unterstützung für ein willkürliches, ionengenerierendes, ternäres Stoffsystem in einem schematischen T/ξ- und P/ξ-Diagramm,

Fig. 6     das Funktionsschaltbild einer galvanischen Konzentrationszelle mit elektrostatischer Unterstützung und geschlossenem, isobaren Stoffkreislauf gemäß dem Kreisprozeß nach Fig. 5 und

Fig. 7     schematisch das elektrische Ersatzschaltbild der galvanischen Konzentrationszelle mit zugeordneter Aktivierungsquelle.

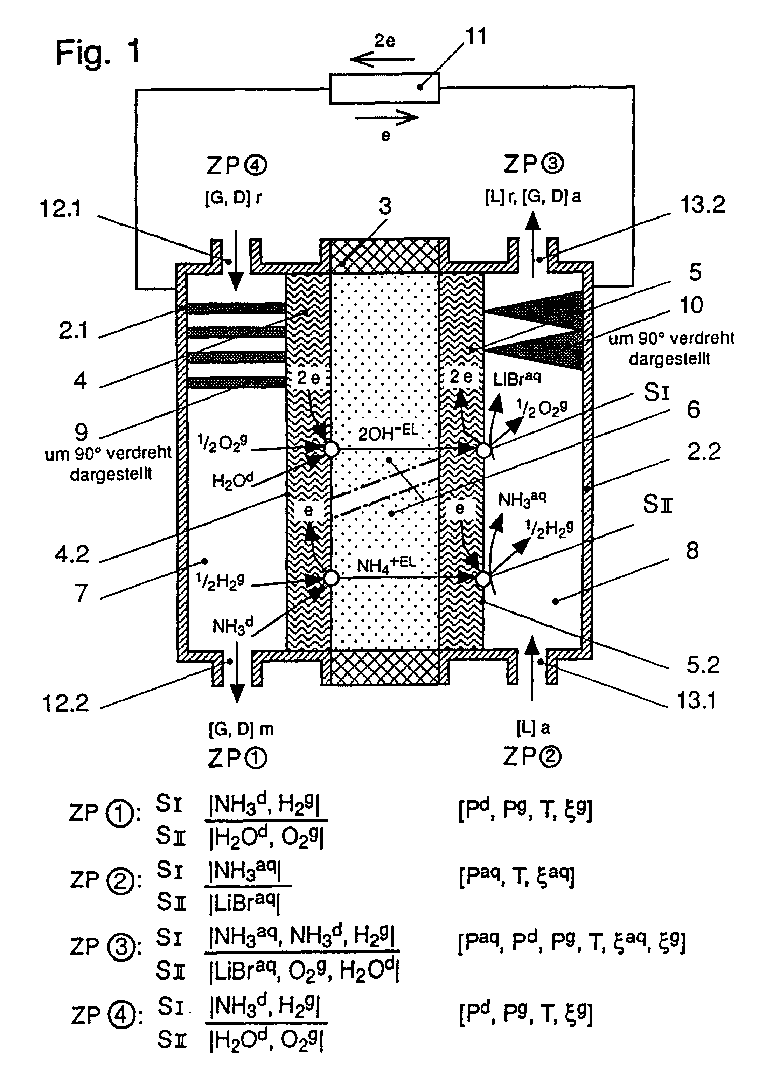

Aufbau und Funktionsweise der galvanischen Membranelektrolyt-Konzentrationszelle werden anhand der Ausführungsbeispiele der Fig. 1 näher erläutert.

Die Membranelektrolytzelle besteht aus einem Zellengehäuse (2), das mit einem medienabdichtenden, galvanisch trennenden Umfangsverschluß (3) in einen ersten Gehäuseteil (2.1) und einen zweiten Gehäuseteil (2.2) unterteilt ist. Das Gehäuse (2) beinhaltet eine flächenförmige, poröse, gasdurchlässige erste Elektrode (4) und eine flächenförmige, poröse, gas- und flüssigkeitsdurchlässige, zweite Elektrode (5). Zwischen den Elektrodenflächen ist alternativ ein selektiv kationen- oder selektiv anionendurchlässiger Membranelektrolyt (6) angeordnet, der mit den porösen Elektroden (4,5) einen mechanisch stabilen Verbund bildet. Die dem Membranelektrolyten (6) abgewandte erste Elektrodenfläche (4.2) bildet mit dem ersten Gehäuseteil (2.1) einen spaltförmigen Gaskanal (7), der von einer dampfgesättigten, kationengenerierenden Trägergasart oder von einer dampfgesättigten anionengenerierenden Trägergasart durchströmt ist. Die dem Membranelektrolyten (6) abgewandte, zweite Elektrodenfläche (5.2) bildet mit dem zweiten Gehäuseteil (2.2) einen spaltförmigen Flüssigkeitskanal (8), der von einer untersättigten, dampfabsorbierenden Lösung [L] durchströmt ist. Die Elektroden (4,5) sind über Stromzu- und ableiteinrichtungen (9,10) und einen äußeren Lastwiderstand (11) elektrisch kurzgeschlossen. Die schematisiert dargestellten Stromzu- und ableiteinrichtungen (9,10) sind in der Fig. 1 um 90° verdreht angeordnet. Sie sind geometrisch wie die von Brennstoffzellen bekannten Leitsysteme aufgebaut, so daß sie die reaktiven Oberflächen der Elektroden nur wenig mindern und die Durchströmung der spaltartigen Kanäle (7,8) nicht behindern.

Dem Gaskanal (7) sind über Öffnungen (12.1, 12.2) im ersten Gehäuseteil (2.1) ein dampfgesättigtes Trägergas $[G,D]_r$,(ZP4) mit hohem Dampfpartialdruck zugeleitet und eine reduzierte Menge dampfgesättigten Trägergases $[G,D]_m$,(ZP1) mit reduziertem Dampfpartialdruck abgeleitet. Dem Flüssigkeitskanal (8) sind über Öffnungen (13.1, 13.2) im zweiten Gehäuseteil (2.2) eine untersättigte Lösung $[L]_a$, (ZP2) mit geringerer Dampfkonzentration und geringem Dampfpartialdruck zugeleitet und ein Zweiphasengemisch $[L]_r,[G,D]_a$, (ZP3) von untersättigter Lösung $[L]_r$,(ZP3) mit erhöhter Dampfkonzentration und geringem Dampfpartialdruck sowie dampfgesättigtes Trägergas $[G,D]_a$,(ZP3) mit demselben geringen Dampfpartialdruck abgeleitet.

Bei Verwendung einer kationengenerierenden Gasart, wie beispielsweise Wasserstoff, und eines selektiv diese Kationenart durchlassenden Membranelektrolyten (6) werden durch anodische Oxidation unter Verzehr von Wasserstoff und Dampf aus dem Gaskanal (7) an der Phasengrenze (4.1) (gas/fest/elektrolyt) der ersten Elektrode (4) Kationen gebildet. Diese wandern durch den Membranelektrolyten (6) zur zweiten Elektrode (5) und konzentrieren an deren Phasengrenze (5.2) (gas/flüssig/fest) durch kathodische Reduktion, unter Freisetzung einer äquivalenten Menge Wasserstoffs die im Flüssigkeitskanal (8) strömende Lösung auf. Die Elektronen fließen hierbei von der ersten Elektrode (4) über die Leiteinrichtungen (9,10) und den äußeren Lastwiderstand (11) zur zweiten Elektrode (5).

Bei Verwendung einer anionengenerierenden Gasart, wie beispielsweise Sauerstoff, und eines selektiv diese Anionenart durchlassenden Membranelektrolyten (6) werden durch kathodische Reduktion unter Verzehr von Sauerstoff und Dampf aus dem Gaskanal (7) an der Phasengrenze (4.1) (gas/fest/elektrolyt) der ersten Elektrode (4) Anionen gebildet. Diese wandern durch den Membranelektrolyten (6) zur zweiten Elektrode (5) und konzentrieren an deren Phasengrenze (5.2) (gas/flüssig/fest) durch anodische Oxidation unter Freisetzung einer äquivalenten Menge Sauerstoffs die im Flüssigkeitskanal (8) strömende Lösung auf. Die Elektronen fließen hierbei von der zweiten Elektrode (5) über die Stromleiteinrichtungen (10,9) und den äußeren Lastwiderstand (11) zur ersten Elektrode (4).

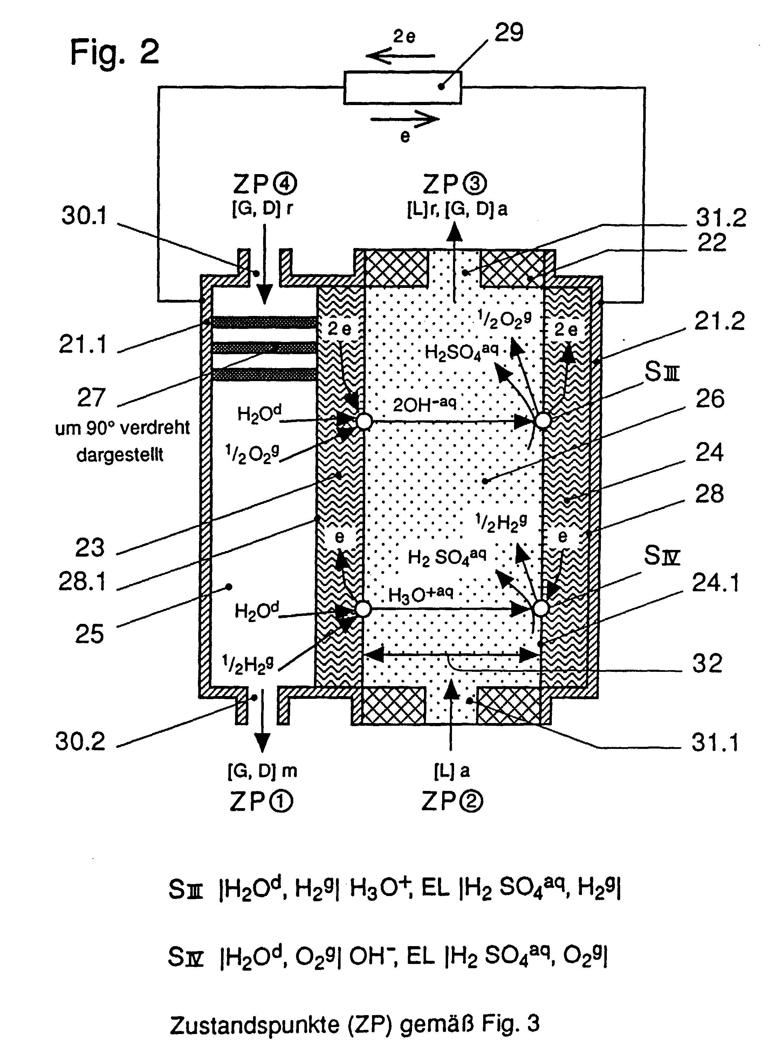

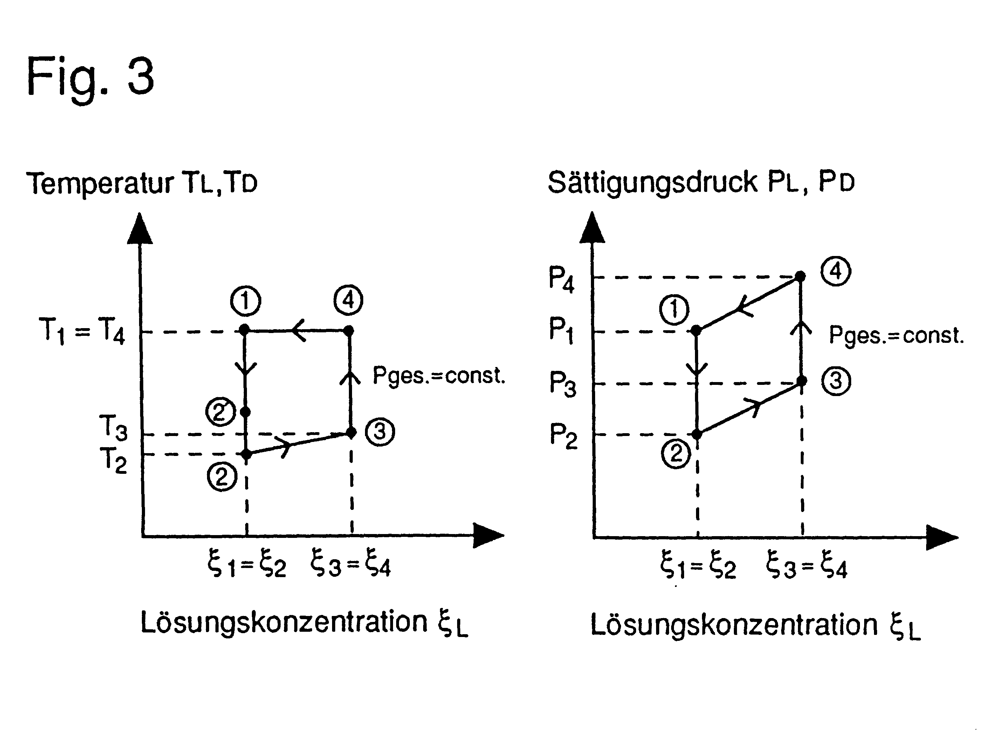

Den der Membranelektrolytzelle nach Fig.1 zu- und abgeleiteten Fluidströmen sind die mit Kreisen gekennzeichneten Zustandspunkte (ZP1 bis ZP4) zugeordnet, die für die jeweiligen Fluidströme Sättigungsgleichgewichte darstellen und durch ihre Zustandsgrößen $[P,T, \xi_L,\xi_D]$ definiert sind. Sie beziehen sich auf den Kreisprozeß nach Fig. 3. Mit der örtlichen Zuordnung der Stoffströme an der Konzentrationszelle ergibt sich die stoffliche Potentialdifferenz des galvanischen Reaktionsablaufs innerhalb der Membranelektrolytzelle. Die dampfgesättigte Gasströmung wird hierfür, unter Querabsaugung einer Teilmenge, vorzugsweise in entgegengesetzter Richtung zur Lösungsströmung, parallel zu den Elektrodenflächen durch die Zelle geführt. Die Dampfkonzentration $\xi_D$ ist über den Reaktionsablauf konstant.

Als ternäre Stoffsystembeispiele wurden für die Membranelektrolytzelle eine wäßrige Lösung von Lithiumbromid in Kombination mit Sauerstoff als anionengenerierendes Reaktionssystem ($S_I$) und eine wäßrige Ammoniaklösung in Kombination mit Wasserstoff als kationengenerierendes Reaktionssystem ($S_{II}$) ausgewählt.

Zwei weitere, ternäre Stoffsysteme von wäßriger Schwefelsäure in Kombination mit Sauerstoff ($S_{III}$) und in Kombination mit Wasserstoff ($S_{IV}$) sind in der Fig. 2 für die Flüssigspaltzelle dargestellt. In den Stoffsystemen ($S_I$, $S_{III}$ und $S_{IV}$) ist Wasser die ausdampfende Gemischkomponente und im Stoffsystem ($S_{II}$) Ammoniak. Die ausgewählten, ternären Stoffsystem-Beispiele sind auf beide Zellenbauarten anwendbar. Die galvanischen Reaktionssysteme lauten:

$S_I$: $[O_2{}^g, H_2O^d]$, $[OH^{-EL}, EI]$, $[LiBr^{aq}, O_2{}^g]$   (anionengenerierend)

$S_{II}$: $[H_2{}^g, NH_3{}^d]$, $[NH_4{}^{+EL}, EI]$, $[NH_3{}^{aq}, H_2{}^g]$   (kationengenerierend)

$S_{III}$: $[O_2{}^g, H_2O^d]$, $[OH^{-aq}, H_2SO_4{}^{aq}]$, $[H_2SO_4{}^{aq}, O_2{}^g]$ (anionengenerierend)

$S_{IV}$: $[H_2{}^g, H_2O^d]$, $[H_3O^{+aq}, H_2SO_4{}^{aq}]$, $[H_2SO_4{}^{aq}, H_2{}^g]$ (kationengenerierend)

Die Elektrodenpaare und die Membranelektrolyte [EI] sind bei den ausgewählten Reaktionssystemen zwar geometrisch gleich, in ihrer Wirkungsweise und im materiellem Aufbau dagegen unterschiedlich. Für das Stoffsystem ($S_{II}$) werden die Elektrodenreaktionen näher ausgeführt:

Reaktionssystem ($S_{II}$):

$$\alpha \left| (NH_3{}^d, H_2{}^g)^\alpha \right| NH_4{}^{+EL}, EI \left| (NH_3{}^{aq}, H_2{}^g)^\beta \right| \beta$$

Kathodenreaktion $\alpha$:

$$e^\alpha + NH_4{}^{+EI} = (NH_3{}^d + \tfrac{1}{2}H_2{}^g)^\alpha$$

Anodenreaktion $\beta$:

$$(NH_3{}^{aq} + \tfrac{1}{2}H_2{}^g)^\beta = NH_4{}^{+EL} + e^\beta$$

Zellreaktion ($\alpha+\beta$):

$$e^\alpha + (NH_3{}^{aq} + \tfrac{1}{2}H_2{}^g)^\beta = (NH_3{}^d + \tfrac{1}{2}H_2{}^g)^\alpha + e^\beta$$

stofflicher Potentialunterschied:

$$(\varphi^\beta - \varphi^\alpha)_{st.} = (R \cdot T/F) \cdot \ln[(P_\alpha/P_\beta)_{NH3} \cdot (P_\alpha/P_\beta)^{\frac{1}{2}}{}_{H2}]$$

elektrostatischer Potentialunterschied:

$$(\varphi^\beta - \varphi^\alpha)_{est.} = C_p/F(T_1 - T_2)_{NH3aq}$$

Als weitere Ausgestaltung der Erfindung werden anhand der Ausführungsbeispiele der Fig. 2 der Aufbau und die Funktionsweise der Sorptionsenergie wandelnden galvanischen Flüssigspaltzelle näher beschrieben.

Die Flüssigspaltzelle besteht aus einem Zellengehäuse (21), das mit einem medienabdichtenden, galvanisch trennenden Umfangsverschluß (22) in einen ersten Gehäuseteil (21.1) und einen zweiten Gehäuseteil (21.2) unterteilt ist. Das Gehäuse (21) beinhaltet eine flächenförmige, mechanisch stabile, poröse, gasdurchlässige erste Elektrode (23) und eine flächenförmige, am zweiten Gehäuseteil (21.2) spaltfrei anliegende, zweite Elektrode (24). Die zueinandergewandten Flächen des ersten Gehäuseteils (21.1) und der ersten Elektrode (23) bilden einen spaltförmigen Gaskanal (25), der von einem dampfgesättigten, kationengenerierenden Trägergasart oder von einem dampfgesättigten, anionengenerierenden Trägergasart [G,D] durchströmt ist. Die zueinandergewandten Elektrodenflächen bilden einen spaltförmigen Flüssigkeitskanal (26), der von einer untersättigten, dampfabsorbierenden, ionenleitenden Lösung [L] durchströmt ist. Die Elektroden (23,24) sind über die Stromzu- und ableitsysteme (27,28) und einen äußeren Lastwiderstand (29) elektrisch kurzgeschlossen. Das gasseitige Stromleitsystem ist geometrisch wie das der Gaselektroden von Brennstoffzellen aufgebaut und in Fig. 2 um 90° verdreht schematisiert dargestellt.

Dem Gaskanal (25) sind über Öffnungen (30.1, 30.2) im ersten Gehäuseteil (21.1) ein dampfgesättigtes Trägergas $[G,D]_r$, (ZP4) mit hohem Dampfpartialdruck zugeleitet und eine reduzierte Menge dampfgesättigten Trägergases $[G,D]_m$, (ZP1) mit reduziertem Dampfpartialdruck abgeleitet. Dem Flüssigkeitskanal (26) sind über Öffnungen (31.1, 31.2) im zweiten Gehäuseteil (21.2) eine untersättigte Lösung [L]a, (ZP2) mit reduzierter Dampfkomponentenkonzentration und geringem Dampfpartialdruck zugeleitet und ein Zweiphasengemisch $[L]_r$, $[G,D]_a$, (ZP3) von untersättigter Lösung $[L]_r$, (ZP3) mit erhöhter Dampfkomponentenkonzentration und geringem Dampfpartialdruck sowie dampfgesättigtes Trägergas $[G,D]_a$, (ZP3) mit demselben geringen Dampfpartialdruck abgeleitet.

Bei Verwendung einer kationengenerierenden Gasart, wie Wasserstoff, werden durch anodische Oxidation unter Verzehr von Wasserstoff und Dampf aus dem Gaskanal (25) an der Phasengrenze (23.2) (gas/

flüssig/ fest) der ersten Elektrode (23) Kationen gebildet. Diese wandern quer zur Lösungsströmung durch den ionenleitenden Flüssigkeitsspalt (32) zur zweiten Elektrode (24) und konzentrieren an deren Phasengrenze (24.1) (gas/flüssig/fest) durch kathodische Reduktion unter Freisetzung einer äquivalenten Menge Wasserstoffs die im Flüssigkeitskanal (26) strömende Lösung auf. Die Elektronen fließen hierbei von der ersten Elektrode (23) über das Stromleitsystem (27,28) und den äußeren Lastwiderstand (29) zur zweiten Elektrode (24).

Bei Verwendung einer anionengenerierenden Gasart, wie Sauerstoff, werden durch kathodische Reduktion unter Verzehr von Sauerstoff und Dampf aus dem Gaskanal (25) an der Phasengrenze (23.2) (gas/ flüssig/ fest) der ersten Elektrode (23) Anionen gebildet. Diese wandern quer zur Lösungsströmung durch den ionenleitenden Flüssigkeitsspalt (32) zur zweiten Elektrode (24) und konzentrieren an deren Phasengrenze (24.1) (gas/flüssig/fest) durch anodische Oxidation, unter Freisetzung einer äquivalenten Menge Sauerstoffs die im Flüssigkeitskanal (26) strömende Lösung auf. Die Elektronen fließen hierbei von der zweiten Elektrode (24) über die Stromleitsystem (27,28) und den äußeren Lastwiderstand (29) zur ersten Elektrode (23).

Den der Konzentrationszelle zu- und abgeleiteten Fluidströmen sind dieselben Zustandspunkte (ZP1 bis ZP4) zugeordnet wie der Fig. 1. Mit ihrer Zuordnung ergibt sich der stoffliche Potentialunterschied des Reaktionsablaufs innerhalb der Flüssigspaltzelle und damit die Eigenspannung der Reaktionszelle. Der dampfgesättigte Gasstrom wird hierfür ebenfalls, unter Querabsaugung einer Teilmenge, vorzugsweise in entgegengesetzter Richtung zum Lösungsstrom und parallel zu den Elektrodenflächen durch die Zelle geführt.

Die Zustandspunkte (ZP1 bis ZP4) der Fluidströme werden im äußeren Teil des Stoffkreislaufs eingestellt. Fig.3 zeigt beispielsweise in zwei schematischen, miteinander korrespondierenden Zustandsdiagrammen den isobar mit einer wässrigen Ammoniaklösung ausgeführten Kreisprozeß. Das Trägergas als dritte Komponente tritt hierbei nur über den Systemgesamtdruck in Erscheinung, und dieser ist im Kreisprozeß konstant. Aufgetragen sind die Sättigungstemperaturen und Sättigungsdrucke der Dampfkomponente und der Lösung jeweils über der Lösungskonzentration $\xi_L$. Gleichartige Kreisprozesse lassen sich auch mit wäßrigen Lösungen ausführen und darstellen, die Wasserdampf als Dampfkomponente bilden, wobei sich die Lösungen beim galvanosorptiven Reaktionsprozeß verdünnen.

Der Kreisprozeß nach Fig. 3 enthält folgende Zustandsänderungen; eine quasi isotherme Trennung der Lösung ($ZP4_L$,$ZP_D$→$ZP1_L$,$ZP4_D$), unter Wärmezufuhr, eine stoffkonstante, interne, rekuperative Wärmerückführung ($ZP1_L$→$ZP2'_L$)/($ZP3_L$→$ZP4_L$), eine stoffkonstante Temperaturabsenkung ($ZP2'_L$→$ZP2_L$) unter Wärmeabgabe und eine quasi isotherme, galvanische Rückbildung der Ausgangslösung ($ZP4_D$, $ZP2_L$→ $ZP3_L$,

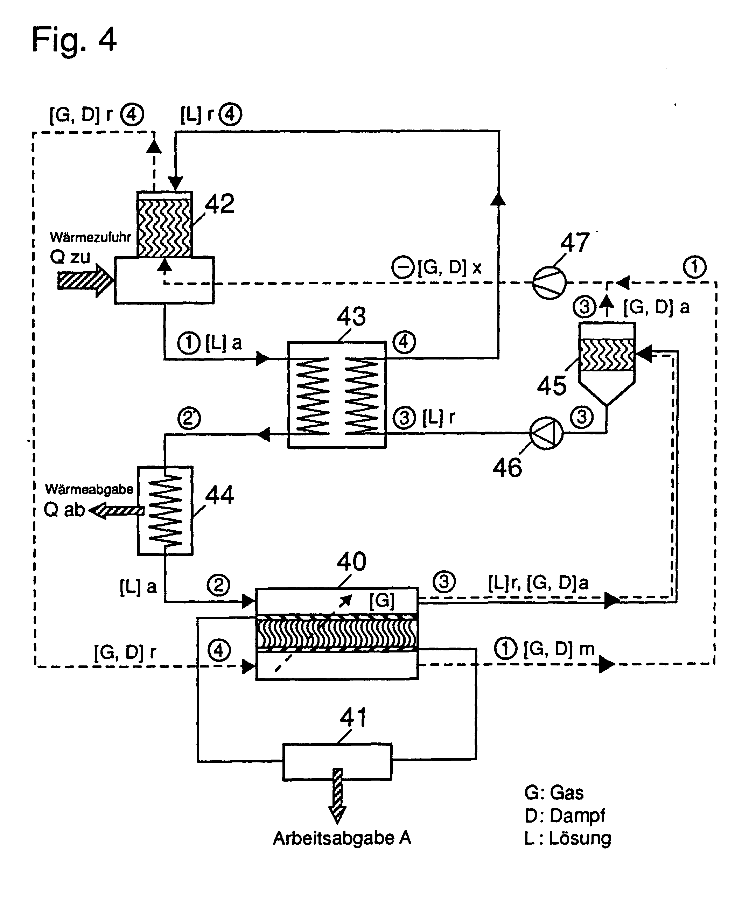

$ZP1_D$) unter Arbeitsabgabe nach außen. Der Kreisprozeß nach Fig. 3 bildet die Basis für die verfahrenstechnische Ausgestaltung des äußeren Stoffkreislaufteils, wie er in Fig. 4 dargestellt und nachfolgend beschrieben ist. Diese Ausgestaltung des äußeren Stoffkreislaufteils ist auf beliebige, thermisch trennbare Lösungen in Kombination mit einem mit der Dampfkomponente ionengenerierenden Trägergas anwendbar.

Der Konzentrationszelle (40) mit äußerem Lastwiderstand (41) sind der beheizte, mit einem Phasenseparator kombinierte Gas-Dampfanreicherer (42), der Lösungsrekuperator (43), der Lösungskühler (44), der Phasenseparator (45), die Lösungspumpe (46) und der Gasverdichter (47), beigeordnet. Die Stoffführung im Kreislauf ist folgende:

Das aus der Konzentrationszelle (40) abgeleitete Zweiphasengemisch $[L]_r$, $[G,D]_a$ , (ZP3) wird oberhalb des Bodens dem Phasenseparator (45) zugeleitet und darin in die Phasen $[L]_r$(ZP3) und $[G,D]_a$,(ZP3) getrennt. Das am Kopf des Phasenseparators (45) abgeleitete, dampfabgereicherte Gas $[G,D]_a$,(ZP3) wird mit dem aus der Konzentrationszelle (40) abgeleiteten, mittelmäßig dampfabgereicherten Gas $[G,D]_m$ (ZP1) vereinigt, die Mischung $[G,D]x$ (ZP-) mit dem Gasverdichter (47) dem Gas-Dampfanreicherer (42) oberhalb des Bodens zugeleitet und in diesem unter Dampfaufnahme der aufgeheizten, dampfverarmenden Lösung $[L]_r$ (ZP4) entgegengeführt. Das am Kopf des Gas-Dampfanreicherers (42) abgeleitete, dampfangereicherte Gas $[G,D]_r$(ZP4) wird der Konzentrationszelle (40) wieder zugeleitet.

Die am Boden aus dem Phasenseparator (45) abgeleitete, dampfangereicherte Lösung $[L]_r$(ZP3) wird mit der Lösungspumpe (46) durch die Sekundärseite des Lösungsrekuperators (43),(ZP4) gefördert und am Kopf in den Gas-Dampfanreicherer (42),(ZP4) eingeleitet. Die dampfverarmte Lösung $[L]_a$,(ZP1) wird am Boden des Gas-Dampfanreicherers (42) abgeleitet, durch die Primärseite des Lösungsrekuperators (43),(ZP2') und durch den Lösungskühler (44),(ZP2) geführt und der Konzentrationszelle (40) ebenfalls zugeleitet. Damit ist über den äußeren Teil des Stoffkreislaufs die stoffliche Versorgung und Entsorgung der galvanischen Konzentrationszelle unter Einhaltung des stofflichen Potentialunterschieds gesichert.

An den verfahrenstechnischen Komponenten (40 bis 47) des äußeren Stoffkreislaufteils sind jeweils am Stoffeintritt und am Stoffaustritt der Komponenten für jeden einzelnen, mit seiner Zusammensetzung [-] gekennzeichneten Stoffstrom die kreisumrandeten Zustandspunkte (ZP1) bis (ZP4) gemäß Fig. 3 angegeben. Sie kennzeichnen die Zustandsänderungen des jeweiligen Stoffstroms innerhalb der Komponenten (40 bis 47). Zwischenzustände im Stoffkreislauf, wie der am primärseitigen Lösungsaustritt (ZP2') des Lösungsrekuperators (43) und der des Mischstroms im Gaskreislauf (ZP-) wurden ebenfalls gekennzeichnet. Sie haben nahezu keinen Einfluß auf die Betriebseigenschaften der galvanischen Konzentrationszelle.

Dem Gas-Dampfanreicherer (42) wird zur Ausdampfung der Lösung [L]r von außen Wärme zugeführt, und im Lösungskühler (44) wird der Lösung [L]a auf unterem Temperaturniveau nur soviel Wärme entzogen, daß der Reaktionsablauf innerhalb der galvanischen Konzentrationszelle (40) adiabatisch abläuft. Die elektrische Nutzarbeit wird der Reaktionszelle (40) über den äußeren Lastwiderstand (41) entzogen. Die Antriebsleistungen der Lösungspumpe (46) und des Gasverdichters (47) sind gering, da beide Fördereinrichtungen nahezu differenzdrucklos fördern und nur die Strömungsdruckverluste des vollständigen Stoffkreislaufs ersetzen müssen. Der äußere Stoffkreislauf ist im verfahrenstechnischen Aufbau unabhängig von der Bauart der galvanischen Konzentrationszelle (Fig.1 und Fig.2).

Ergänzt werden kann eine dem Gas-Dampfanreicherer (42) nachzuschaltende Dampfreinigung mittels partieller Rückflußkondensation für den Fall, daß bei der thermischen Trennung von Lösungen mit Eigendampfdruck des Lösungsmittels ein zu hoher Lösungsmitteldampfanteil im dampfgesättigten Trägergas enthalten ist und dieser, trotz seiner kontinuierlichen Entsorgung aus der galvanischen Konzentrationszelle, den galvanischen Reaktionsablauf innerhalb der Konzentrationszelle behindern sollte. Die partielle Rückflußkondensation kann unter Verwendung des überschüssigen Kühlpotentials der dampfangereicherten Lösung [L]r ebenfalls rekuperativ ausgeführt werden.

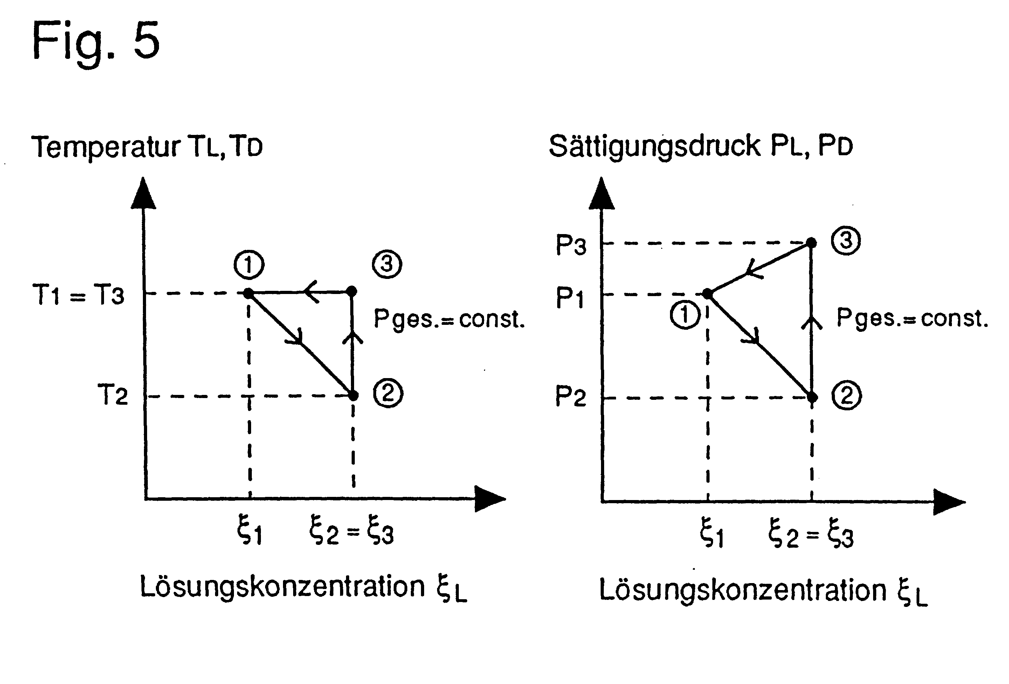

Ein Kreisprozeß zur thermogalvanischen Energiewandlung besonderer Art ist in Fig. 5 dargestellt. Er wird mit äußerer, elektrostatischer Unterstützung des galvanischen Reaktionsprozesses möglich. In den zwei korrespondierenden Zustandsdiagrammen, in denen die Sättigungstemperaturen und Sättigungsdrucke von Lösung und Dampfkomponente jeweils über der Lösungskonzentration aufgetragen sind, stellt sich dieser jeweils als Dreiecksprozeß dar. Das Trägergas tritt wiederum nur über den konstanten Systemgesamtdruck des Stoffumlaufs in Erscheinung, wobei $P_{ges.} = P_D + P_G$ ist.

Der Kreisprozeß enthält als Zustandsänderungen; eine quasi isotherme, thermische Trennung der Lösung $(ZP3_L, ZP1_D \rightarrow ZP3_D, ZP1_L)$, eine stoffkonstante Lösungsaufheizung $(ZP2_L \rightarrow ZP3_L)$ unter Wärmezufuhr von außen, und eine aus einer Überlagerung von isothermer Stoffänderung und isentroper, stoffkonstanter Temperaturabnahme resultierenden, (polytropen) galvanischen Lösungsrückbildung $(ZP1_L, ZP3_D \rightarrow ZP2_L, ZP1_D)$ unter Arbeitsabgabe nach außen.

Die Zustandspunkte sind wiederum für die betreffenden Fluidströme Gleichgewichtszustände und durch ihre Zustandsgrößen $(P, T, \xi L, \xi D)$ definiert. Der stoffliche Potentialunterschied des polytropen, galvanischen Reaktionsprozesses wird mit der örtlichen Zuordnung der Fluidströme an der Konzentrationszelle erzielt. Mit der zusätzlichen, elektrostatischen Unterstützung des Elektrodenpotentials wird unter Erhöhung der Zellarbeitsspannung die Abkühlung der dampfabsorbierenden Lösung erzwungen. Der polytrope Sorptionsprozeß innerhalb der Konzentrationszelle kann in diesem Fall adiabatisch oder nichtadiabatisch geführt und von außen über die elektrostatisch den Elektroden aufgeprägte Spannungsdifferenz beeinflußt werden.

Die aus dem stofflichen Potentialunterschied der galvanischen Konzentrationszelle resultierende Zelleigenspannung induziert den Ionenstrom und damit im äußeren elektrischen Kreislauf den Elektronenstrom, während die der Eigenspannung überlagerte, elektrostatische Spannung die Temperaturabnahme der dampfsättigenden Lösung bewirkt. Die von außen aufzuprägende elektrostatische Zusatzspannung verhält sich beim polytropen Sorptionsprozeß proportional zur Temperaturabnahme der Lösung und umgekehrt proportional zur Aufkonzentrierung der Lösung. Sie kann ein Mehrfaches des Eigenspannungswertes der Zelle betragen. Proportional mit der elektrostatischen Zusatzspannung erhöht sich über die Arbeitsspannung der Konzentrationszelle ihre elektrische Nutzarbeitsausbeute. Start- und Betriebsbedingung für die Ausführung des polytropen, galvanischen Reaktionsprozesses ist das Vorhandensein der aus dem stofflichen Potentialunterschied resultierenden Eigenspannung der Konzentrationszelle.

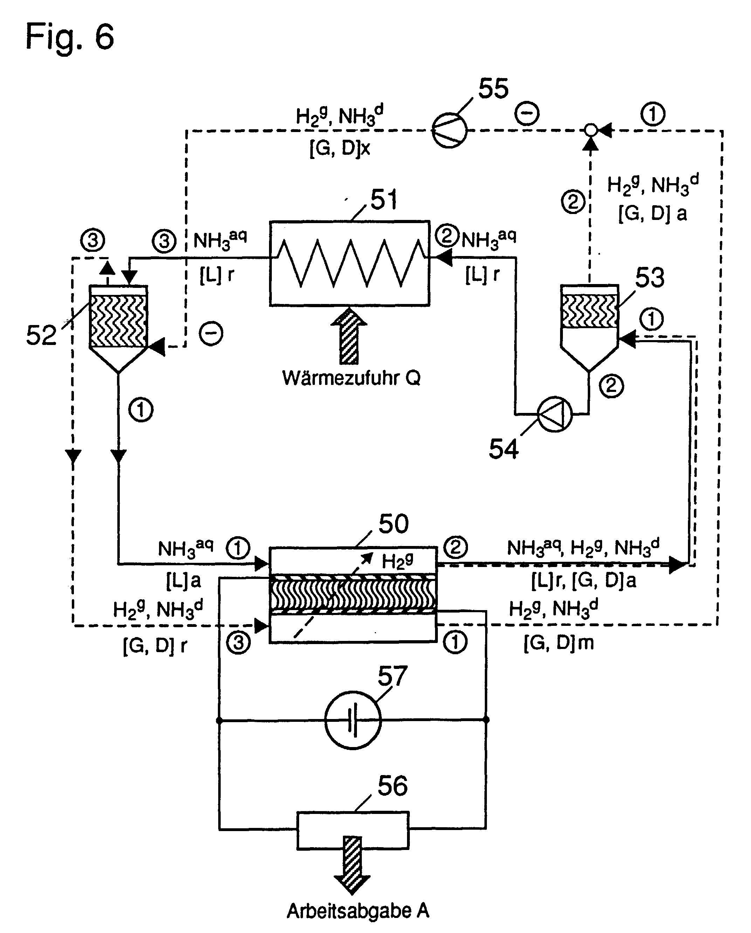

Der Kreisprozeß nach Fig. 5 bildet die Basis für die verfahrenstechnische Ausgestaltung des äußeren Stoffkreislaufteils zur Bereitstellung der nicht im Gleichgewicht befindlichen Stoffversorgung und Stoffentsorgung der Konzentrationszelle. Der geschlossene Stoffkreislauf ist in Fig. 6 dargestellt und wird nachfolgend beschrieben. Der Konzentrationszelle (50) mit äußeren Lastwiderstand (56) und zugeschalteter, elektrostatischer Aktivierungsquelle (57) sind der beheizte Lösungserhitzer (51), der mit einem Phasenseparator kombinierte Gas-Dampfanreicherer (52), der Phasenseparator (53), die Lösungspumpe (54) und der Gasverdichter (55) zugeordnet. Die allgemeine, für derartige, ternäre Stoffsysteme geltende Stoffführung im äußeren Kreislaufteil ist folgende:

Das aus der Konzentrationszelle (50) abgeleitete Zweiphasengemisch $[L]_r, [G,D]_a, (ZP2)$ wird oberhalb des Bodens dem Phasenseparator (53) zugeleitet und darin in die Phasen $[L]_r(ZP2)$ und $[G,D]_a, (ZP2)$ getrennt. Das am Kopf des Phasenseparators (53) abgeleitete, dampfabgereicherte Gas $[G,D]_a, (ZP2)$ wird mit dem aus der Konzentrationszelle (50) abgeleiteten, mittelmäßig dampfabgereicherten Gas $[G,D]_m, (ZP1)$ vereinigt und die Mischung $[G,D]_x, (ZP-)$ mit dem Gasverdichter (55) dem Gas-Dampfanreicherer (52) am Boden zugeleitet und unter Dampfaufnahme der aufgeheizten, dampfverarmenden Lösung $[L]_r, (ZP3)$ entgegengeführt. Das am Kopf des Gas-Dampfanreicherers (52) abgeleitete, dampfangereicherte Gas $[G,D]_r, (ZP3)$ wird der Konzentrationszelle (50) wieder zugeleitet.

Die am Boden des Phasenseparators (53) abgeleitete, dampfangereicherte Lösung $[L]_r, (ZP2)$ wird

mit der Lösungspumpe (54) durch den Lösungserhitzer (51) gefördert (ZP3) und am Kopf in den Gas-Dampfanreicherer (52) eingeleitet, und die am Boden des Gas-Dampfanreicherers (52) abgeleitete, dampfverarmte Lösung [L]$_a$,(ZP1) der Konzentrationszelle (50) ebenfalls wieder zugeleitet. Damit ist über den äußeren Teil des Stoffkreislaufs die stoffliche Versorgung und Entsorgung der galvanischen Konzentrationszelle sichergestellt.

Für das ternäre Stoffsystem Wasserstoff als Trägergas in Kombination mit einer wäßrigen Ammoniaklösung sind die einzelnen Fluidströme des Stoffkreislaufs der Fig. 6 als Beispiel angegeben. Bei extrem kleinen Aufkonzentrierungen der Lösung ($\Delta\xi_L \leq 10\%$) ist zu berücksichtigen, daß die für die Induzierung des Ionenstroms erforderliche, aus dem stofflichen Potentialunterschied resultierende Eigenspannung der Zelle ebenfalls sehr klein wird. In diesem Fall kann die der Konzentrationszelle zuzuleitende, dampfverarmte Lösung [L]a in einem beizustellenden Rekuperator im Gegenstrom zur abgekühlten, dampfangereicherten Lösung [L]$_r$ partiell vorgekühlt und auf diesem Wege der stoffliche Potentialunterschied und damit die Eigenspannung der Konzentrationszelle erhöht werden.

Eine zusätzliche Reinigung der Dampfkomponente mittels partieller Rückflußkondensation kann im Bedarfsfall ergänzt werden. Die verfahrenstechnische Ausgestaltung des Stoffkreislaufs nach Fig.6 ist ebenfalls auf beliebige Stoffsysteme anwendbar.

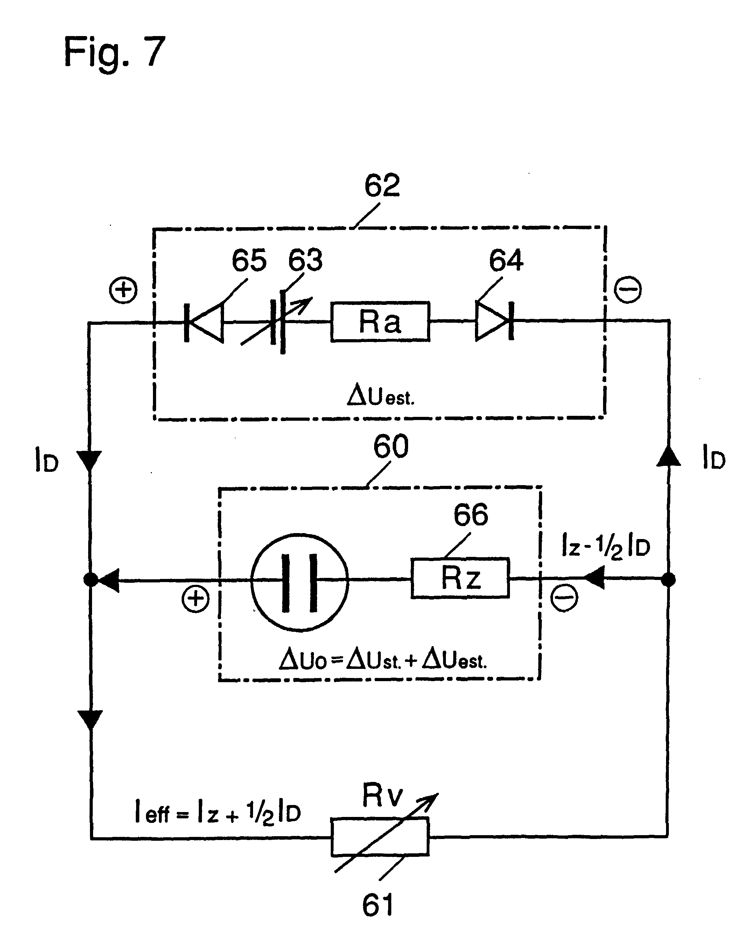

Die Zuordnung der elektrostatischen Aktivierungsquelle (62) zum elektrischen Kreislauf der galvanischen Konzentrationszelle (60) mit polytropem Reaktionsablauf zeigt Fig.7 in einem elektrischen Ersatzschaltbild. Die Aktivierungsquelle (62) ist elektrisch parallel zur Konzentrationszelle (60) und zum Verbraucherwiderstand (61) geschaltet. Die Aktivierungsquelle (62) besteht aus einer variabel einstellbaren Gleichstrom-Spannungsquelle (63) und zwei den Stromfluß auf wenige mA begrenzenden Sperrdioden (64,65). Die Richtungen der Potentiale der Konzentrationszelle (60) und der Aktivierungsquelle (62) sind gleich, ebenso sind der Innenwiderstand (66) der Konzentrationszelle (60) und der Verbraucherwiderstand (61) gleichohmig, wobei der Verbraucherwiderstand (61) dem Innenwiderstand (66) der Konzentrationszelle (60) angepaßt werden kann.

Ist die Aktivierungsquelle (62) abgeschaltet, generiert die Konzentrationszelle (60) aufgrund ihres stofflichen Potentialunterschieds ihre niedere Eigenspannung, und der Arbeitsstrom Iz fließt über den Verbraucherwiderstand (61) zurück zur Konzentrationszelle (60). Die Arbeitsspannung beträgt hierbei $\Delta U_{eff.} = \Delta U_{st.} \cdot I_{eff.} \cdot R_Z$.

Bei eingeschalteter Aktivierungsquelle (62) fließt bei der um den elektrostatischen Spannungsanteil U$_{est.}$ erhöhten Spannung $\Delta U_o = AU_{st.} + \Delta U_{est.}$ der Arbeitsstrom $I_{eff.} = I_Z + 1/2 I_D$ über den Verbraucherwiderstand (61), während der Konzentrationszelle (60) der Zellenarbeitsstrom (Iz -1/2ID) zurückfließt und der Diodendurchlaßstrom I$_D$ von der Aktivierungsquelle (62) kommt und ihr wieder zufließt. Die Arbeitsspannung der Konzentrationszelle (60) beträgt somit $\Delta U_{eff.} = \Delta U_o \cdot (I_Z - 1/2 I_D) \cdot R_Z$, wobei der Diodendurchlaßstrom I$_D$ sehr viel kleiner als I$_Z$ und damit vernachlässigbar ist. Die um den elektrostatischen Spannungsanteil Uest. erhöhte elektrische Leistung der Konzentrationszelle(60) resultiert aus der Lösungsabkühlung des polytropen Reaktionsablaufs.

## Patentansprüche

1. Verfahren zur kontinuierlichen Umwandlung von Sorptionsenergie in elektrische Nutzarbeit mittels einer galvanischen Membranelektrolyt-Konzentrationszelle (1) als nutzarbeitsgenerierenden Reaktionsteil eines stofflich geschlossenen thermogalvanischen Reaktionskreislaufs, bei dem der Konzentrationszelle ein aus einem Dampf/Trägergasgemisch und einer den Dampf absorbierenden Lösung bestehendes, ternäres Stoffsystem zu- und abgeleitet ist und die Konzentrationszelle ein Zellengehäuse (2) aufweist, das eine flächenförmige, poröse, gasdurchlässige erste Elektrode (4) und eine flächenförmige, poröse, gas- und flüssigkeitsdurchlässige, zweite Elektrode (5) beinhaltet und zwischen den einander zugewandten Elektrodenflächen einen selektiv ionenleitenden Membranelektrolyten (6) enthält, welcher mit den porösen Elektroden (4,5) einen mechanischen Verbund bildet und der Elektroden/Membranverbund mit einem medienabdichtenden, galvanischtrennenden Umfangsverschluß (3) des Zellengehäuses dieses in einen ersten Gehäuseteil (2.1) und einen zweiten Gehäuseteil (2.2) unterteilt, bei dem ein durch die dem Membranelektrolyten (6) abgewandte erste Elektrodenfläche (4.2) und den ersten Gehäuseteil (2.1) gebildeter spaltförmiger Gaskanal (7) von einer dampfgesättigten, mit der Dampfkomponente ionengenerierenden Trägergasart [G,D] durchströmt ist und ein durch die dem Membranelektrolyten (6) abgewandte, zweite Elektrodenfläche (5.2) und den zweiten Gehäuseteil (2.2) gebildeter spaltförmiger Flüssigkeitskanal (8) von der dampfabsorbierenden Lösung [L] durchströmt ist und die Elektroden (4,5) mittels Stromzu- und ableitsysteme (9,10) über einen äußeren Lastwiderstand (11) elektrisch kurzgeschlossen sind, bei dem dem Gaskanal (7) über eine Öffnung (12.1) im ersten Gehäuseteil (2.1) dampfgesättigtes Trägergas [G,D]$_r$ mit hohem Dampfpartialdruck zugeleitet und über eine Öffnung (12.2) eine reduzierte Menge dampfgesättigten Trägergases [G,D]$_m$ mit reduziertem Dampfpartialdruck abgeleitet ist und dem Flüssigkeitskanal (8) über eine Öffnung (13.1) im zweiten Gehäuseteil (2.2) eine untersättigte Lösung [L]$_a$ mit geringerem Dampfkomponentengehalt und geringem Dampfpartialdruck zugeleitet und über eine Öffnung (13.2) ein Zweiphasengemisch $[L]_r$, $[G,D]_a$ von untersättigter Lösung mit erhöhtem Dampfkomponentengehalt und dampfgesättigtes Trägergas mit demselben Dampfpartialdruck abgeleitet ist, so daß sich bei Verwendung einer mit der Dampfkomponente kationengenerierenden Trägergasart und eines selektiv diese Kationenart leitenden Membranelektrolyten (6) durch anodische Oxidation unter Verzehr von Trägergas und Dampf aus dem Gaskanal (7) an der Phasengrenze (4.1) (gas/fest/elektrolyt) der ersten Elektrode (4) Kationen bilden, diese durch den Membranelektrolyten (6) zur zweiten Elektrode (5) wandern und an deren Phasengrenze (5.2) (gas/flüssig/fest) durch kathodische Reduktion unter Freisetzung einer äquivalenten Menge Trägergases die im Flüssigkeitskanal (8) strömende Lösung aufkonzentrieren, während die Elektronen von der ersten Elektrode (4) über die Stromleitsysteme (9,10) und den äußeren Lastwiderstand (11) zur zweiten Elektrode (5) fließen oder, bei dem sich bei Verwendung einer mit der Dampfkomponente anionengenerierenden Trägergasart und eines selektiv diese Anionenart leitenden Membranelektrolyten (6) durch kathodische Reduktion unter Verzehr von Trägergas und Dampf aus dem Gaskanal (7) an der Phasengrenze (4.1) (gas/fest/elektrolyt) der ersten Elektrode (4) Anionen bilden, diese durch den Membranelektrolyten (6) zur zweiten Elektrode (5) wandern und an deren Phasengrenze (5.2) (gas/flüssig/fest) durch anodische Oxidation unter Freisetzung einer äquivalenten Menge Trägergases die im Flüssigkeitskanal (8) strömende Lösung aufkonzentrieren, während die Elektronen von der zweiten Elektrode (5) über die Stromleitsysteme (9,10) und den äußeren Lastwiderstand (11) zur ersten Elektrode (4) fließen.

2. Verfahren zur kontinuierlichen Umwandlung von Sorptionsenergie in elektrische Nutzarbeit mittels einer galvanischen Flüssigelektrolyt-Konzentrationszelle (20) als nutzarbeitsgenerierenden Reaktionsteil eines stofflich geschlossenen thermogalvanischen Reaktionskreislaufs, bei dem der Konzentrationszelle ein aus einem Dampf/Trägergasgemisch und einer den Dampf absorbierenden Lösung bestehendes, ternäres Stoffsystem zu- und abgeleitet ist und die Konzentrationszelle ein Zellengehäuse (21) aufweist, das eine flächenförmige, mechanisch stabile, poröse, gasdurchlässige erste Elektrode (23) und eine flächenförmige, am zweiten Gehäuseteil (21.2) spaltfrei anliegende, zweite Elektrode (24) beinhaltet und mit einem medienabdichtenden, galvanisch trennenden Umfangsverschluß (22) in einen ersten Gehäuseteil (21.1) und einen zweiten Gehäuseteil (21.2) unterteilt ist, bei dem ein durch die zueinandergewandten Flächen des ersten Gehäuseteils (21.1) und der ersten Elektrode (23) gebildeter, spaltförmiger Gaskanal (25) von einer dampfgesättigten, mit der Dampfkomponente ionengenerierenden Trägergasart $[G,D]$ durchströmt ist und ein durch die zueinandergewandten Elektrodenflächen gebildeter, spaltförmiger Flüssigkeitskanal (26) von einer dampfabsorbierenden, ionenleitenden Lösung $[L]$ durchströmt ist und die Elektroden (23,24) über Stromzu- und ableitsysteme (27,28) und einen äußeren Lastwiderstand (29) elektrisch kurzgeschlossen sind, bei dem dem Gaskanal (25) über eine Öffnung (30.1) im ersten Gehäuseteil (21.1) dampfgesättigtes Trägergas $[G,D]_r$ mit hohem Dampfpartialdruck zugeleitet und über eine Öffnung (30.2) eine reduzierte Menge dampfgesättigten Trägergases $[G,D]_m$ mit reduziertem Dampfpartialdruck abgeleitet ist, dem Flüssigkeitskanal (26) über eine Öffnung (31.1) im zweiten Gehäuseteil (21.2) eine untersättigte Lösung $[L]_a$ mit reduziertem Dampfkomponentengehalt und geringem Dampfpartialdruck zugeleitet und über eine Öffnung (31.2) ein Zweiphasengemisch $[L]_r$, $[G,D]_a$ von untersättigter Lösung $[L]_r$ mit erhöhtem Dampfkomponentengehalt und dampfgesättigtes Trägergas $[G,D]_a$ mit demselben Dampfpartialdruck abgeleitet ist, so daß sich bei Verwendung einer mit der Dampfkomponente kationengenerierenden Trägergasart durch anodische Oxidation unter Verzehr von Trägergas und Dampf aus dem Gaskanal (25) an der Phasengrenze (23.2) (gas/flüssig/fest) der ersten Elektrode (23) Kationen bilden, diese quer zur Lösungsströmung durch den ionenleitenden Flüssigkeitsspalt (32) zur zweiten Elektrode (24) wandern und an deren Phasengrenze (24.1) (gas/flüssig/fest) durch kathodische Reduktion unter Freisetzung einer äquivalenten Menge Trägergases die im Flüssigkeitskanal (26) strömende Lösung aufkonzentrieren, während die Elektronen von der ersten Elektrode (23) über die Stromleitsysteme (27,28) und den äußeren Lastwiderstand (29) zur zweiten Elektrode (24) fließen oder, bei dem sich bei Verwendung einer mit der Dampfkomponente anionengenerierenden Trägergasart durch kathodische Reduktion unter Verzehr von Trägergas und Dampf aus dem Gaskanal (25) an der Phasengrenze (23.2) (gas/flüssig/fest) der ersten Elektrode (23) Anionen bilden, diese quer zur Lösungsströmung durch den ionenleitenden, Flüssigkeitsspalt (32) zur zweiten Elektrode (24) wandern und an deren Phasengrenze (24.1) (gas/flüssig/fest) durch anodische Oxidation, unter Freisetzung einer äquivalenten Menge Trägergases die im Flüssigkeitskanal (26) strömende Lösung aufkonzentrieren, während die Elektronen von der zweiten Elektrode (24) über die Stromleitsysteme (27,28) und den äußeren Lastwiderstand (29) zur ersten Elektrode (23) fließen.

3. Verfahren nach Anspruch 1 oder 2, bei dem der galvanischen Konzentrationszelle neben dem am galvanischen Reaktionsprozeß beteiligten, mit der Dampfkomponente ionengenerierenden und systemdruckausgleichenden Trägergas eine beliebige, auf thermischem Wege in eine Dampfkomponente und eine Flüssigkomponente zerlegbare, dampfabsorbierende Lösung zu- und abgeleitet ist, wobei Wasserstoff eine mit der Dampfkomponente kationengenerierende Trägergasart ist und Sauerstoff eine mit der Dampfkomponente anionengenerierende Trägergasart und das am nutzarbeitsgenerierenden Reaktionsprozeß insgesamt beteiligte Stoffsystem mindestens ein ternäres ist.

4. Verfahren nach Anspruch 3, <u>dadurch gekennzeichnet,</u> daß dem ternären Stoffsystem eine die Ionenleitfähigkeit erhöhende, im Lösungsmittel lösliche Elektrolytkomponente mit vernachlässigbarem Eigendampfdruck hinzugefügt ist.

5. Verfahren nach einem der Ansprüche 3 oder 4, <u>dadurch gekennzeichnet,</u> daß der in Konzentrationszelle ablaufende Reaktionsprozeß adiabatisch oder nichtadiabatisch geführt ist, wobei im Falle der nichtadiabatischen Prozeßführung eine lösungsberührende Elektrode eingesetzt ist, die oder deren Stromleitsystem über ihre Fläche gleichmäßig verteilte, von einem Wärmeübertragungsmedium durchströmte Kanäle aufweist, deren wärmeübertragende Wandungen mediumundurchlässig sind.

6. Verfahren nach Anspruch 5 <u>dadurch gekennzeichnet,</u> daß die mit Medienfördereinrichtungen im Kreislauf geführten Stoffphasenmengen so bemessen sind, daß sich im nutzarbeitsgenrierenden Reaktionsteil eine konstantbleibende Aufkonzentrierung oder Verdünnung der Lösung und eine konstantbleibende Dampfverarmung des Trägergases einstellt, wobei der Systemgesamtdruck mit der Trägergasbefüllung des Kreislaufs eingestellt ist und dieser gleich hoch oder höher ist als der im ternären Stoffumlauf erreichte, obere Dampfpartialdruck.

7. Verfahren nach den Ansprüchen (3, 4, 5 und 6) <u>dadurch gekennzeichnet,</u> daß den Elektroden eine Aktivierungspannungsquelle zugeordnet ist, die ihnen permanent einen quasi elektrostatischen Potentialunterschied von mehreren Volt aufprägt, wobei diese Potentialdifferenz der Eigenspannungsdifferenz der Konzentrationszelle überlagert ist.

8. Verfahren nach Anspruch 6 oder 7, <u>dadurch gekennzeichnet,</u> daß die der galvanischen Konzentrationszelle (40) zu- und abgeleiteten Stoffströme zu einem isobaren, ternären Stoffkreislauf mit äußerer thermischer Stoffzerlegung und äußerer Phasentrennung ausgebildet sind, indem ein beheizter, mit einem Phasenseparator kombinierter Gas-Dampfanreicherer (42), ein Lösungsrekuperator (43), ein Lösungskühler (44), ein Phasenseparator (45), eine Lösungspumpe (46) und ein Gasverdichter (47) zugeordnet sind, wobei das aus der Konzentrationszelle (40) abgeleitete Zweiphasengemisch $[L]_r$, $[G,D]_a$ oberhalb des Bodens dem Phasenseparator (45) zugeleitet ist, das am Kopf des Phasenseparators (45) abgeleitete, dampfabgereicherte Trägergas $[G,D]_a$ mit dem aus der Konzentrationszelle abgeleiteten, mittelmäßig dampfabgereicherten Trägergas $[G,D]_m$ vereinigt und die Trägergasmischung $[G,D]_x$ über den Gasverdichter (47) dem Gas-Dampfanreicherer (42) am Boden zugeleitet und in diesem unter Dampfaufnahme der aufgeheizten dampfverarmenden Lösung $[L]_r$ entgegengeführt ist und das am Kopf des Gas-Dampfanreicherers (42) abgeleitete, dampfangereicherte Trägergas $[G,D]_r$ der Konzentrationszelle (40) wieder zugeleitet ist, während die am Boden aus dem Phasenseparator (45) abgeleitete, dampfangereicherte Lösung $[L]_r$ mit der Lösungspumpe (46) durch die Sekundärseite des Lösungsrekuperators (43) (41) gefördert, am Kopf in den Gas-Dampfanreicherer (42) eingeleitet ist und die dampfverarmte Lösung $[L]_a$ am Boden des Gas-Dampfanreicherers (42) abgeleitet, durch die Primärseite des Lösungsrekuperators (43) und durch den Lösungskühler (44) geführt, der Konzentrationszelle (40) wieder zugeleitet ist.

9. Verfahren nach Anspruch 6 und 7 <u>dadurch gekennzeichnet,</u> daß die der Konzentrationszelle (50) mit äußerem Lastwiderstand (56) und zugeschalteter Aktivierungsquelle (57) zu- und abgeleiteten Stoffströme zu einem isobaren, ternären Stoffkreislauf mit äußerer thermischer Stoffzerlegung und äußerer Phasentrennung ausgebildet sind, indem ein beheizter Lösungserhitzer (51), ein mit einem Phasenseparator kombinierter Gas-Dampfanreicherer (52), ein Phasenseparator (53), eine Lösungspumpe (54) und ein Gasverdichter (55) zugeordnet sind, wobei das aus der Konzentrationszelle (50) abgeleitete Zweiphasengemisch $[L]_r$, $[G,D]_a$ oberhalb des Bodens dem Phasenseparator (53) zugeleitet ist, das am Kopf des Phasenseparators (53) abgeleitete, dampfabgereicherte Trägergas $[G,D]_a$ mit dem aus der Konzentrationszelle abgeleiteten, mittelmäßig dampfabgereicherten Trägergas $[G,D]_m$ vereinigt und die Trägergasmischung $[G,D]_x$ mit dem Gasverdichter (55) dem Gas-Dampfanreicherer (52) am Boden zugeleitet und in diesem unter Dampfaufnahme der aufgeheizten und dampfverarmenden Lösung $[L]_r$ entgegengeführt ist und das am Kopf des Gas-Dampfanreicherers (52) abgeleitete, dampfangereicherte Trägergas $[G, D]_r$ der Konzentrationszelle (50) wieder zugeleitet ist, während die am Boden des Phasenseparators (53) ab-

geleitete, dampfangereicherte Lösung [L]$_r$ mit der Lösungspumpe (54) durch den Lösungserhitzer (51) gefördert und am Kopf in den Gas-Dampfanreicherer (52) eingeleitet ist und die am Boden des Gas-Dampfanreicherers (52) abgeleitete, dampfverarmte Lösung [L]$_a$ der Konzentrationszelle (50) wieder zugeleitet ist.

## Claims

1. Procedure for the continuous conversion of sorptive energy into useful electrical work using a galvanic membrane electrolyte concentration cell (1) as the reaction component for the generation of useful work in a closed, thermo-galvanic reaction circuit in which a ternary substance system consisting of a vapour/carrier gas mixture and a solution absorbing the vapour is fed in to and carried off from the concentration cell and in which the concentration cell has a cell housing (2) containing a flat-shaped, porous, gas-permeable first electrode (4) and a flat-shaped, porous, gas- and liquid-permeable second electrode (5) and which contains between the electrode faces a selectively ion-conducting membrane electrolyte (6) which forms with the porous electrodes (4,5) a mechanical composite unit and the electrode/membrane composite unit divides the cell housing by a media-sealing, galvanically separating peripheral seal of the cell housing (3) into a first housing part (2.1) and a second housing part (2.2) in which the first electrode face (4.2) facing away from the membrane electrolyte (6) forms with the first housing part (2.1) a slit-shaped gas channel (7) through which a vapour-saturated, ion-generating carrier gas type [G,V] flows, and in which the second electrode face (5.2) facing away from the membrane electrolyte (6) forms with the second housing part (2.2) a slit-shaped liquid channel (8) through which the vapour-absorbing solution [S] flows and the electrodes (4,5) are electrically short-circuited by current lead-in and lead-off systems (9,10) and an external load resistor (11), whereby via an opening (12.1) in the first housing part (2.1) vapour-saturated carrier gas [G,V]r with high vapour partial pressure is fed to the gas channel (7) and via an opening (12.2) a reduced quantity of vapour-saturated carrier gas [G,V]m with reduced vapour partial pressure is carried off, via an opening (13.1) in the second housing part (2.2) an undersaturated solution [S]p with lower vapour component content and a low vapour partial pressure is fed to the liquid channel (8) and via an opening (13.2) a two-phase mixture [S]r, [G,V]p of undersaturated solution with raised vapour component content and vapour-saturated carrier gas with the same low vapour partial pressure is carried off, so that when use is made of a carrier gas type which is cation-generating in conjunction with the vapour component and a membrane electrolyte (6) selectively letting through this cation type, cations form at the phase boundary (4.1) (gas/solid/electrolyte) of the first electrode (4) as a result of anodic oxidation with the consumption of carrier gas and vapour from the gas channel (7), these migrate through the membrane electrolyte (6) to the second electrode (5) and at its phase boundary (5.2) (gas/liquid/solid) increase the concentration of the solution flowing in the liquid channel (8) as a result of cathodic reduction with the liberation of an equivalent quantity of carrier gas, whilst the electrons from the first electrode (4) flow via the current conduction systems (9,10) and the external load resistor (11) to the second electrode (5) or, when use is made of a carrier gas type which is anion-generating in conjuction with the vapour component and a membrane electrolyte (6) selectively conducting this anion type, anions form at the phase boundary (4.1) (gas/solid/electrolyte) of the first electrode (4) as a result of cathodic reduction with the consumption of carrier gas and vapour from the gas channel (7), these migrate through the membrane electrolyte (6) to the second electrode (5) and at its phase boundary (5.2) (gas/liquid/solid) increase the concentration of the solution flowing in the liquid channel (8) as a result of anodic oxidation with the liberation of an equivalent quantity of carrier gas, whilst the electrons from the second electrode (5) flow via the current conduction systems (9,10) and the external load resistor (11) to the first electrode (4).

2. Procedure for the continuous conversion of sorptive energy into useful electrical work using a galvanic liquid electrolyte concentration cell (20) as the reaction component for the generation of useful work in a closed, thermo-galvanic reaction circuit in which a ternary substance system consisting of a vapour/carrier gas mixture and a solution absorbing the vapour is fed in to and carried off from the concentration cell and in which the concentration cell has a cell housing (21) containing a flat-shaped, mechanically stable, porous, gas-permeable first electrode (23) and a flat-shaped, second electrode (24) lying adjacent without a gap to the second housing part (21.2), and which is divided by a media-sealing, galvanically separating peripheral seal (22) into a first housing part (21.1) and a second housing part (21.2), in which the faces of the first housing part (21.1) and the first electrode (23) facing one another form a slit-shaped gas channel (25) and a vapour-saturated, ion-generating carrier gas type [G,V] flows through the latter and in which the electrode faces facing one another form a slit-shaped liquid channel (26) and a vapour-absorbing, ion-conducting solution [S] flows through the latter and the electrodes (23,24) are electrically short-circuited by current lead-in and lead-off systems (27,28) and an external load resistor (29), whereby via an opening (30.1) in the first housing part (21.1) vapour-saturated carrier gas [G,V]r with high vapour partial pressure is fed to the gas channel (25) and via an opening (30.2) a reduced quantity of vapour-saturated carrier gas [G,V]m with reduced vapour partial pressure is carried off, via an opening (31.1) in the second housing part (21.2) an undersaturated solution [S]p with reduced vapour component content and low vapour partial pressure is fed to the liquid channel (26) and via an opening (30.2) a two-phase mixture [S]r, [G,V]p of undersaturated solution [S]r with raised vapour component content and vapour-saturated carrier gas [G,V]p with the same vapour partial pressure is carried off, so that when use is made of a carrier gas type which is cation-generating in conjunction with the vapour component, cations form at the phase boundary (23.2) (gas/liquid/solid) of the first electrode (23) as a result of anodic oxidation with the consumption of carrier gas and vapour from the gas channel (25), these migrate transversely to the solution flow through the ion-conducting liquid gap (32) to the second electrode (24) and at its phase boundary (24.1) (gas/liquid/solid) increase the concentration of the solution flowing in the liquid channel (26) as a result of cathodic reduction with the liberation of an equivalent quantity of carrier gas, whilst the electrons from the first electrode (23) flow via the current conduction systems (27,28) and the external load resistor (29) to the second electrode (24), or when use is made of a carrier gas type which is anion-generating in conjunction with the vapour component, anions form at the phase boundary (23.2) (gas/liquid/solid) of the first electrode (23) as a result of cathodic reduction with the consumption of carrier gas and vapour from the gas channel (25), these migrate transversely to the solution flow through the ion-conducting, liquid gap (32) to the second electrode (24) and at its phase boundary (24.1) (gas/liquid/solid) increase the concentration of the solution flowing in the liquid channel (26) as a result of anodic oxidation, with the liberation of an equivalent quantity of carrier gas, whilst the electrons from the second electrode (24) flow via the current conduction systems (27,28) and the external load resistor (29) to the first electrode (23).

3. Procedure according to claim 1 or 2, in which apart from the ion-generating and system pressure equalising carrier gas involved in the galvanosorptive reaction process any vapour-absorbing solution thermally decomposable into a vapour component and a liquid component can in principle be fed to and carried off from the galvanic concentration cell, whereby hydrogen is a cation-generating carrier gas type in conjunction with the vapour component and oxygen is a anion-generating carrier gas type in conjunction with the vapour component and the substance system involved in the useful work generation process as a whole is at least a ternary substance system.

4. Procedure according to claim 3, characterised in that an electrolyte component soluble in the solvent and with negligible inherent vapour-pressure is added to the ternary substance system in order to increase the ion-conductivity.

5. Procedure according to one of claims 3 or 4, characterised in that the reaction process taking place in the concentration cell is run adiabatically or non-adiabatically, whereby in the case of non-adiabatic running of the process an electrode in contact with the solution is used and this electrode or its current conduction system has channels distributed uniformly over its area through which a heat transfer medium flows, whose heat-transferring walls are medium-impermeable.

6. Procedure according to claim 5, characterised in that the substance phase quantities conveyed in the circuit by media-conveying devices are measured so that in the useful work generation reaction part a constant-remaining increase in concentration or dilution of the solution and a constant-remaining vapour depletion of the carrier gas is established, whereby the overall system pressure is adjusted by the carrier gas filling of the circuit and the latter is at the same level as or higher than the upper vapour partial pressure reached in the ternary substance circulation.

7. Procedure according to the claims (3, 4, 5 and 6) characterised in that there is assigned to the electrodes an activation voltage source which permanently confers on them a quasi electrostatic potential difference of several volts, whereby this potential difference is superimposed on the inherent voltage difference of the concentration cell.

8. Procedure according to the claim 6 or 7 characterised in that substance flows fed to and carried off from the galvanic concentration cell (40) are formed into an isobaric, ternary substance circuit with external thermal substance decomposition and external phase separation by allocating a heated gas vapour enricher (42) combined with a phase separator, a solution recuperator (43), a solution cooler (44), a phase separator (45), a solution pump (46) and a gas compressor (47), whereby the two-phase mixture [S]r, [G,V]p carried off from the concentration cell (40) is fed above the bottom to the phase separator (45) and the phases [S]r and [G,V]p are separated, the vapour-depleted carrier gas [G,V]p carried off at the head of the phase separator (45) is united with the moderately vapour-depleted carrier gas [G,V]m carried off from the concentration cell and the mixture [G,V]x is fed by the gas compressor (47) to the gas vapour enricher (42) at the bottom and in the latter is conveyed towards the heated vapour-depleting solution [S]r with vapour uptake and the vapour-enriched carrier gas [G,V]r carried off at the head of the gas vapour enricher (42) is fed again to the concentration cell (40), whilst the vapour-enriched solution [S]r carried off at the bottom from the phase separator (45) is conveyed by the solution pump (46) through the secondary side of the solution recuperator (43) (41) and introduced at the head into the gas vapour enricher (42) and the vapour-depleted solution [S]p is carried off at the bottom of the gas vapour enricher (42), passed through the primary side of the solution recuperator (43) and through the solution cooler (44) and fed again to the concentration cell (40).

9. Procedure according to the claim 6 or 7 <u>characterised in</u> that the substance flows fed to and carried off from the concentration cell (50) with external load resistor (56) and connected activation source (57) are formed into an isobaric, ternary substance circuit with external thermal substance decomposition and external phase separation by allocating a heated solution heater (51), a gas vapour enricher (52) combined with a phase separator, a phase separator (53), a solution pump (54) and a gas compressor (55), whereby the two-phase mixture [S]r, [G,V]p carried off from the concentration cell (50) is fed above the bottom to the phase separator (53), the vapour-depleted carrier gas [G,V]p carried off at the head of the phase separator (53) is united with the moderately vapour-depleted carrier gas [G, V]m carried off from the concentration cell and the carrier gas mixture [G,V]x is fed by the gas compressor (55) to the gas vapour enricher (52) at the bottom and in the latter is conveyed towards the heated and vapour-depleting solution [S]r with vapour uptake and the vapour-enriched carrier gas [G, V]r carried off at the head of the gas vapour enricher (52) is fed again to the concentration cell (50), whilst the vapour-enriched solution [S]r carried off at the bottom of the phase separator (53) is conveyed by the solution pump (54) through the solution heater (51) and introduced at the head into the gas vapour enricher (52) and the vapour-depleted solution [S] p carried off at the bottom of the gas vapour enricher (52) is fed again to the concentration cell (50).

**Revendications**

1. Un procédé permettant la transformation en continu de l'énergie de sorption en travail électrique utile via une cellule de concentration à électrolyte membranaire galvanique (1), utilisée comme cellule de réaction générant du travail utile à partir d'un circuit de réaction thermogalvanique fonctionnant en circuit fermé sur le plan de la matière ; cette cellule de réaction étant traversée par un système ternaire constitué d'un mélange gaz vecteur / vapeur et d'une solution absorbant la vapeur ; incluant un boîtier de cellule (2) constituée en particulier d'une première électrode (4) plate, poreuse et perméable aux gaz et d'une seconde électrode (5) plate, poreuse et perméable aux gaz et aux liquides ; entre les deux surfaces des électrodes disposées l'une en face de l'autre, ce boîtier de cellule contient un électrolyte membranaire (6) conduisant les ions de manière sélective ; ce dernier formant avec les électrodes poreuses (4, 5) un système composite mécaniquement stable qui, avec le couvercle (3) étanche au média et galvaniquement isolant du boîtier de cellule divise ce dernier en un élément de boîtier (2.1) et un élément de boîtier (2.2) ; le premier canal de gaz (7) en forme de fente constitué entre la surface d'électrode (4.2) la plus éloignée de l'électrolyte membranaire (6) et le premier élément de boîtier (2.1) étant traversé par un gaz vecteur (G, D) générateur d'ions en phase vapeur et effectivement saturé en phase vapeur ; le second canal liquide (8) constitué entre la surface de l'électrode (5.2) la plus éloignée de l'électrolyte membranaire (6) et le second élément de boîtier (2.2) étant traversé par la solution (L) absorbant la vapeur ; les électrodes (4,5) étant électriquement reliées l'une à l'autre par des dispositifs (9, 10) de conduction du courant et par une résistance de charge (11) externe ; un gaz vecteur (G, D)r saturé en vapeur et caractérisé par une pression partielle élevée de vapeur étant amené dans le canal de gaz (7) via le goulot d'entrée (12.1) ménagé dans l'élément de boîtier (2.1) ; une quantité inférieure de gaz vecteur (G,D)m saturé en vapeur et caractérisée par une pression partielle réduite de vapeur sortant du canal de gaz (7) via le goulot de sortie (12.2) ; une solution (L)a sous-saturée caractérisée par une concentration réduite en vapeur et par une pression partielle réduite de vapeur étant amenée dans le canal liquide (8) via le goulot d'entrée (13.1) ménagé dans l'élément de boîtier (2.2) ; un mélange biphasique (L)r, (G,D)a de solution sous-saturée mais caractérisée par une concentration en vapeur plus élevée et de gaz vecteur saturé de vapeur et caractérisé par la même pression partielle de vapeur sortant du canal liquide (8) via le goulot de sortie (13.2) ; si bien que lorsque l'on utilise d'une part un gaz vecteur générateur de cations en phase vapeur, et d'autre part un électrolytique membranaire (6) sélectivement perméable à ce type d'ions, des cations apparaissent à la limite de phase (4.1) gaz/solide/électrolyte de la première électrode (4) suite à une oxydation anodique consommant le gaz vecteur et la phase vapeur contenus dans le canal de gaz (7) ; ces cations migrant alors vers la deuxième électrode (5) à travers l'électrolyte membranaire (6), se retransformant au niveau de la limite de phase (5.2) gaz/liquide/solide par réduction cathodique et sont libérés pour venir augmenter dans une quantité équivalente la concentration en gaz vecteur de la solution (L) qui traverse le canal liquide (8), tandis que les électrons de la première électrode (4) sont attirés et se dirigent vers la seconde électrode (5) via les dispositifs (9, 10) de conduction du courant et une résistance de charge (11) externe ou que lorsque l'on utilise d'une part un gaz vecteur générateur d'anions en phase vapeur, et d'autre part un électrolytique membranaire (6) sélectivement perméable à ce type d'ions, des anions apparaissent à la limite de phase (4.1) gaz/solide/électrolyte de la première électrode (4) suite à une réduction cathodique consommant le gaz vecteur et la phase vapeur contenus dans le canal de gaz (7) ; ces anions migrant alors vers la deuxième électrode (5) à travers l'électrolyte membranaire (6), se retransformant au niveau de la limite de phase (5.2) gaz/liquide/solide par oxydation anodique et sont libérés pour venir augmenter dans une quantité équivalente la concentration en gaz vecteur de la solution (L) qui traverse le canal liquide (8), tandis que les électrons de la seconde électrode (5) sont attirés et se dirigent vers la première électrode (4) via les dispositifs (9, 10) de conduction du courant et une résistance de charge (11).

2. Un procédé permettant la transformation en continu de l'énergie de sorption en travail électrique utile via une cellule de concentration à électrolyte galvanique fluide (20), utilisée comme cellule de réaction générant du travail utile à partir d'un circuit de réaction thermogalvanique fonctionnant en circuit fermé sur le plan de la matière ; cette cellule de réaction étant traversée par un système ternaire constitué d'un mélange gaz vecteur / vapeur et d'une solution absorbant la vapeur ; incluant un boîtier de cellule (21) constituée en particulier d'une première électrode (23) plate, stable mécaniquement, poreuse et perméable aux gaz et d'une seconde électrode (24) plate disposée directement contre le second élément de boîtier (21.2); ce boîtier de cellule (21) étant divisé avec le couvercle (22) étanche au média et galvaniquement isolant en un élément de boîtier (21.1) et un élément de boîtier (21.2) ; le canal de gaz (25) en forme de fente constitué entre les surfaces disposées en vis à vis du premier élément de boîtier (21.2) et de la première électrode (23) étant traversé par un gaz vecteur (G, D) générateur d'ions en phase vapeur et effectivement saturé en phase vapeur ; le canal de liquide (26) constitué entre les deux surfaces des électrodes (23) et (24) disposées l'une en face de l'autre étant traversé par la solution (L) absorbant la vapeur conduisant les ions ; les électrodes (23, 24) étant électriquement reliées l'une à l'autre par des dispositifs (27, 28) de conduction du courant et par une résistance de charge (29) externe ; un gaz vecteur (G, D)r saturé en vapeur et caractérisé par une pression partielle élevée de vapeur étant amené dans le canal de gaz (25) via le goulot d'entrée (30.1) ménagé dans l'élément de boîtier (21.1) ; une quantité inférieure de gaz vecteur (G,D)m saturé en vapeur et caractérisée par une pression partielle réduite de vapeur sortant du canal de gaz (25) via le goulot de sortie (30.2) ; une solution (L)a sous-saturée caractérisée par une concentration réduite en vapeur et par une pression partielle réduite de vapeur étant amenée dans le second élément de boîtier (21.2) et plus précisément dans le canal liquide (26) via le goulot d'entrée (31.1) ; un mélange biphasique (L)r, (G,D) a de solution sous-saturée mais caractérisée par une concentration en vapeur plus élevée et de gaz vecteur saturé de vapeur et caractérisé par la même pression partielle de vapeur sortant du canal liquide (26) via le goulot de sortie (31.2) ; si bien que lorsque l'on utilise un gaz vecteur générateur de cations en phase vapeur, des cations apparaissent à la limite de phase (23.2) gaz/liquide/solide de la première électrode (23) suite à une oxydation anodique consommant le gaz vecteur et la phase vapeur contenus dans le canal de gaz (25) ; ces cations migrant alors perpendiculairement au flux de liquide vers la deuxième électrode (24) à travers l'espace interélectrode (32) conducteur d'ions, se retransformant au niveau de la limite de phase (24.1) gaz/liquide/solide par réduction cathodique et sont libérés pour venir augmenter dans une quantité équivalente concentration en gaz vecteur de la solution (L) qui traverse le canal liquide (26), tandis que les électrons de la première électrode (23) sont attirés et se dirigent vers la seconde électrode (24) via les dispositifs (27, 28) de conduction du courant et une résistance de charge (28) externe ou que lorsque l'on utilise d'une part un gaz vecteur générateur d'anions en phase vapeur, des anions apparaissent à la limite de phase (23.2) gaz/liquide/solide de la première électrode (23) suite à une réduction cathodique consommant le gaz vecteur et la phase vapeur contenus dans le canal de gaz (25) ; ces anions migrant alors perpendiculairement au flux de liquide vers la deuxième électrode (24) à travers l'espace interélectrode (32) conducteur d'ions, se retransformant au niveau de la limite de phase (24.1) gaz/liquide/solide par oxydation anodique et sont libérés pour venir augmenter dans une quantité équivalente la concentration en gaz vecteur de la solution (L) qui traverse le canal liquide (26), tandis que les électrons de la seconde électrode (24) sont attirés et se dirigent vers la première électrode (23) via les dispositifs (27, 28) de conduction du courant et une résistance de charge (29).

3. Un procédé conforme à la revendication 1 ou 2 dans lequel, outre le gaz vecteur générateur d'ions en phase vapeur qui assure l'équilibre de pression du système et qui est impliqué dans la réaction de sorption galvanique, une solution absorbant la vapeur et thermiquement décomposable en une phase gazeuse et une phase liquide est amenée puis extraite de la cellule de réaction ; l'hydrogène étant un type de gaz vecteur générateur de cations en phase vapeur et l'oxygène étant un type de gaz vecteur générateur d'anions en phase vapeur ; le système de substances participant au procédé fournisseur de travail utile étant au moins ternaire.

4. Un procédé conforme à la revendication 3 caractérisé par le fait qu'un composant électrolytique soluble dans un solvant et dont la pression de vapeur propre reste négligeable est rajouté au système de substance ternaire pour augmenter la conductivité des ions.

5. Un procédé conforme aux revendications 3 ou 4 caractérisé par le fait que le processus réactionnel s'exécutant dans la cellule de réaction est conduit de manière adiabatique ou non adiabatique ; dans lequel, dans le cas d'une conduite du processus réactionnel non adiabatique, l'électrode (respectivement : les deux électrodes) en contact avec la solution ou son dispositif de conduction du courant (respectivement : leurs dispositifs de conduction du courant) dispose (respectivement : disposent) de canaux répartis sur toute sa surface (respectivement : leurs surfaces), dans lesquels circule un fluide thermiquement conducteur et dont les parois thermiquement conductrices sont imperméables au fluide en question.

6. Un procédé conforme à la revendication 5 caractérisé par le fait que les quantités de substances amenées dans le circuit par l'intermédiaire de dispositifs d'approvisionnement en média sont calculées de manière à ce que dans la partie de la cellule de réaction fournissant le travail utile s'établisse un enrichissement ou un appauvrissement constant de la solution ainsi qu'un appauvrissement constant du gaz vecteur ; la pression globale du système étant réglée sur la pression de remplissage du circuit en gaz vecteur, celle-ci étant égale ou supérieure à la plus haute pression partielle en vapeur du circuit du système ternaire de substances.

7. Un procédé conforme aux revendications (3, 4, 5 ou 6) caractérisé par le fait qu'une source de tension d'activation est affectée aux électrodes, qui leur impose en permanence une différence de potentiel de plusieurs volts de manière quasiment électrostatique ; cette différence de potentielle se superposant à la différence de potentiel propre de la cellule de réaction.

8. Un procédé conforme à la revendication 6 ou 7 caractérisé par le fait que les flux de substances entrant et sortant de la cellule de réaction (40) galvanique constituent ceux d'un circuit ternaire isobare, la décomposition thermique des substances et la séparation des phases étant effectuées à l'extérieur ; ceci étant obtenu grâce à la mise en oeuvre d'un enrichisseur de vapeur (42) chauffé combiné avec un séparateur de phase, d'un récupérateur de solution (43) d'un refroidisseur de solution (44), d'un séparateur de phase (45), d'une pompe de solution (46) et d'un compresseur de gaz (47) ; le mélange biphasique (L)r, (G,D)a sortant de la cellule de réaction étant amené au dessus du fond du séparateur de phase (45) ; le flux de gaz vecteur (G,D)a appauvri en vapeur sortant de la tête du séparateur de phase (45) étant rejoint par le flux de gaz vecteur (G,D)m moyennement appauvri en vapeur sortant de la cellule de réaction (40) pour former le flux de gaz vecteur (G,D)x qui traverse le compresseur de gaz (47) et est ensuite dirigé vers le fond de l'enrichisseur de vapeur (42) dans lequel il est confronté au flux de solution chauffée (L)r enrichi en vapeur mais s'appauvrissant en vapeur en circulant en sens contraire ; le flux de gaz vecteur (G, D)r enrichi en vapeur sortant de la tête de l'enrichisseur de vapeur (42) étant finalement retourné vers l'entrée correspondante de la cellule de réaction (40) tandis que le flux de solution (L)r enrichi en vapeur sortant du fond du séparateur de phase (45) est dirigé via la pompe de solution (46) vers le circuit secondaire du récupérateur de solution (43) (41) pour être ensuite dirigé vers la tête de l'enrichisseur de vapeur (42) ; du fond de l'enrichisseur de vapeur (42) le flux de solution (L)a ressort appauvri en vapeur ; il est alors dirigé à travers le circuit primaire du récupérateur de solution (43) puis vers le refroidisseur de solution (44), pour finalement être retourné à l'entrée correspondante de la cellule de réaction (40).

9. Un procédé conforme à la revendication 6 et 7 caractérisé par le fait que les flux de substances entrant et sortant de la cellule de réaction (40) galvanique, racordée à une résistance de charge (56) externe et à une source de tension d'activation (57), constituent ceux d'un circuit ternaire isobare, la décomposition thermique des substances et la séparation des phases étant effectuées à l'extérieur ; ceci étant obtenu grâce à la mise en oeuvre d'un réchauffeur de solution (51), d'un enrichisseur de vapeur (52) chauffé combiné avec un séparateur de phase , d'un séparateur de phase (53), d'une pompe de solution (54) et d'un compresseur de gaz (55) ; le mélange biphasique (L)r, (G,D)a sortant de la cellule de réaction (50) étant amené au dessus du fond du séparateur de phase (53) ; le flux de gaz vecteur (G,D)a appauvri en vapeur sortant de la tête du séparateur de phase (53) étant rejoint par le flux de gaz vecteur (G,D)m moyennement appauvri en vapeur sortant de la cellule de réaction (50) pour former le flux de gaz vecteur (G,D)x qui traverse le compresseur de gaz (55) et est ensuite dirigé vers le fond de l'enrichisseur de vapeur (52) dans lequel il est confronté au flux de solution chauffée (L)r enrichi en vapeur mais s'appauvrissant en vapeur en circulant en sens contraire ; le flux de gaz vecteur (G, D)r enrichi en vapeur sortant de la tête de l'enrichisseur de vapeur (52) étant finalement retourné vers l'entrée correspondante de la cellule de réaction (50) tandis que le flux de solution (L)r enrichi en vapeur sortant du fond du séparateur de phase (53) est dirigé via la pompe de solution (54) vers réchauffeur de solution (51) pour être ensuite dirigé vers la tête de l'enrichisseur de vapeur (52) ; du fond de l'enrichisseur de vapeur (52) le flux de solution (L)a ressort appauvri en vapeur ; pour être finalement retourné à l'entrée correspondante de la cellule de réaction (50).

Fig. 1

ZP④  [G, D] r
ZP③  [L] r, [G, D] a

ZP①: SI $|NH_3^d, H_2^g|$  $[P^d, P^g, T, \xi^g]$
      SII $|H_2O^d, O_2^g|$

ZP②: SI $|NH_3^{aq}|$  $[P^{aq}, T, \xi^{aq}]$
      SII $|LiBr^{aq}|$

ZP③: SI $|NH_3^{aq}, NH_3^d, H_2^g|$  $[P^{aq}, P^d, P^g, T, \xi^{aq}, \xi^g]$
      SII $|LiBr^{aq}, O_2^g, H_2O^d|$

ZP④: SI $|NH_3^d, H_2^g|$  $[P^d, P^g, T, \xi^g]$
      SII $|H_2O^d, O_2^g|$

Fig. 2

$S_{III}$ $|H_2O^d, H_2^g|$ $H_3O^+$, EL $|H_2 SO_4^{aq}, H_2^g|$

$S_{IV}$ $|H_2O^d, O_2^g|$ $OH^-$, EL $|H_2 SO_4^{aq}, O_2^g|$

Zustandspunkte (ZP) gemäß Fig. 3

# Fig. 3

Temperatur $T_L, T_D$

Sättigungsdruck $P_L, P_D$

Lösungskonzentration $\xi_L$

Lösungskonzentration $\xi_L$

EP 0 809 869 B1

# Fig. 4

[G, D] r ④    [L] r ④

42

Wärmezufuhr
Q zu

47

⊖[G, D] x

①

③ ↑ [G, D] a

① [L] a    43    ④

45

②    ③ [L] r    ③

46

Wärmeabgabe
Q ab    44

40

[G]

[L] a    ②    ③    [L]r, [G, D]a

[G, D] r    ④    ① [G, D] m

41

Arbeitsabgabe A

G: Gas
D: Dampf
L : Lösung

# Fig. 5

Temperatur TL, TD

T1 = T3

T2

① ③

Pges. = const.

②

$\xi_1$   $\xi_2 = \xi_3$

Lösungskonzentration $\xi_L$

Sättigungsdruck PL, PD

P3 ③

P1 ①

Pges. = const.

P2 ②

$\xi_1$   $\xi_2 = \xi_3$

Lösungskonzentration $\xi_L$

EP 0 809 869 B1

## Fig. 6

# Fig. 7